# EUROPÄISCHE PATENTSCHRIFT

(11) **EP 2 120 553 B1**
(45) Veröffentlichungstag und Bekanntmachung des Hinweises auf die Patenterteilung: **28.05.2014**
(21) Anmeldenummer: 07822847.5
(22) Anmeldetag: 23.11.2007
(51) Int. Cl.: A01N 25/12, A01N 25/10, A01N 47/24, A01N 43/653

(54) **HERSTELLUNG VON FESTEN LÖSUNGEN VON PESTIZIDEN DURCH KURZZEITÜBERHITZUNG UND SCHNELLE TROCKNUNG**
PRODUCTION OF SOLID SOLUTIONS OF PESTICIDES BY SHORT TERM SUPERHEATING AND RAPID DRYING
PROCÉDÉ DE PRODUCTION DE SOLUTIONS SOLIDES DE PESTICIDES PAR SURCHAUFFE DE COURTE DURÉE ET SÉCHAGE RAPIDE

(30) Priorität: 01.12.2006 EP 06125227
(43) Veröffentlichungstag der Anmeldung: 25.11.2009
(73) Patentinhaber: BASF SE, 67056 Ludwigshafen (DE)
(72) Erfinder: KOLTER, Karl, 67117 Limburgerhof (DE); SCHÖNHERR, Michael, 67227 Frankenthal (DE); ASCHERL, Hermann, 67246 Dirmstein (DE); DIELEMAN, Cedric, 67630 Scheibenhard (FR); KNIERIEM, Torsten, 68305 Mannheim (DE); KOLTZENBURG, Sebastian, 67125 Dannstadt-Schauernheim (DE); TÜRK, Holger, 68161 Mannheim (DE)
(86) Internationale Anmeldenummer: PCT/EP2007/062756
(87) Internationale Veröffentlichungsnummer: WO 2008/065051

(56) Entgegenhaltungen:
- WO-A-94/23579
- WO-A-2006/111327

## Beschreibung

Die vorliegende Erfindung betrifft ein Verfahren zur Herstellung von festen Lösungen von schwerlöslichen Pestiziden.

In wässrigen Medien schwerlösliche Pestizide bereiten bei der Formulierung Schwierigkeiten, da es mit derartigen Wirkstoffen nicht einfach ist, Formulierungen zu entwickeln, in welchen das Pesitzid bioverfügbar ist. Ein Ansatz hierzu ist die Bildung fester Lösungen, in welchen das Pestizid in molekulardisperser Form eingearbeitet ist, wodurch häufig eine deutlich höheren Bioverfügbarkeit erreicht wird.

In der Literatur wird der Begriff feste Lösung oft nicht korrekt gebraucht, da auch Einbettungen fester kristalliner Stoffe als feste Lösung bezeichnet werden. Strenggenommen handelt es sich hierbei aber um feste Dispersionen. In dieser Schrift wird unter fester Lösung eine echte molekulardisperse Verteilung verstanden.

Die Herstellung solcher festen Lösungen ist bis heute ein recht aufwändiger Prozess.

Folgende Methoden stehen zur Verfügung:
1. Schmelzen von Wirkstoff und Polymer bei hoher Temperatur und Extrusion (s. z.B. WO 03/028453). Dieses Verfahren hat den Nachteil, dass minutenlang hohe Temperaturen auf den Wirkstoff einwirken und zudem große Formkörper entstehen, die mühsam durch Mahlung zerkleinert werden müssen, um granulierbar bzw tablettierbar zu sein. Hinzu kommt, dass bei der Schmelzextrusion neben der Temperaturbelastung auch Scherkräfte einwirken, die zur Zersetzung der Wirkstoffe führen können.
2. Lösen von Wirkstoff und Polymer in einem organischen Lösungsmittel, das beide löst, und Abdampfen des Lösungsmittels oder Sprühtrocknen, alternativ Lösen von Wirkstoff in einem organischen, mit Wasser mischbaren Lösungsmittel und Lösen des Polymers in Wasser (s. z.B. WO 05/046328). Dieses Verfahren hat per se den Nachteil, dass in großem Umfang organische Lösungsmittel eingesetzt werden müssen, die umweltschädlich und explosionsgefährlich sind, und deren Verwendung erheblich Kosten verursacht.
3. Dispergieren von Wirkstoff in einer wässrigen Polymerlösung, zum Beispiel durch Nassmahlung und Sprühtrocknen. Hierbei werden, wenn der Wirkstoff nicht was serlöslich ist, keine festen Lösungen gebildet, sondern nur feste Dispersionen, die bei weitem nicht über die Eigenschaften verfügen wie molekulardisperse Lösungen, insbesondere nicht im Hinblick auf die Bioverfügbarkeit.

Die WO 2006/111327 beschreibt Pflanzenschutzzubereitungen, die ein Conazolfungizid und mindestens einen weiteren Pflanzenschutzwirkstoff sowie ein Copolymer enthalten. Die beschriebenen Formulierungen werden unter Verwendung organischer Lösungsmittel hergestellt.

Die WO 94/23579 beschreibt feste Pflanzenschutzformulierungen, die ein pyrethroides Insektizid und Polyvinylpyrrolidon enthalten. Die beschriebenen Formulierungen werden entweder durch Sprühtrocknung unter Verwendung eines organischen Lösungsmittels oder durch Koextrudieren hergestellt.

Aufgabe der vorliegenden Erfindung war es daher, ein Verfahren zu finden, das organische Lösungsmittel vermeidet, keine große Temperaturbelastung für die Pestizide mit sich bringt und direkt ein Produkt mit guter Formulierbarkeit und Fließfähigkeit liefert.

Weitere Aufgabe der vorliegenden Erfindung war es, Formulierungen in Form fester Lösungen bereitzustellen, welche
- eine hohe Bioverfügbarkeit aufweisen und/oder
- eine gute Lagerstabilität aufweist; und/oder
- einen möglichst hohen Wirkstoffgehalt haben.

Demgemäß wurde ein Verfahren zur Herstellung von pulverförmigen festen Lösungen schwerlöslicher Pestizide, in denen das schwerlösliche Pestizid molekulardispers in einer Hilfsstoffmatrix vorliegt, durch Zerstäuben einer Lösung des schwerlöslichen Pestizides und der Matrixhilfsstoffe gefunden, welches dadurch gekennzeichnet ist, dass eine wässrige Suspension des schwerlöslichen Pestizides in Gegenwart der Matrixhilfsstoffe bei Drücken von 0,08 bis 20 MPa auf Temperaturen > 80°C bis 350 °C, vorzugsweise 90°C bis 350 °C erhitzt und das schwerlösliche Pestizid in Lösung gebracht wird, und anschließend durch Zerstäuben und Trocknen in pulverförmige Form überführt wird, wobei die Temperatur der Sprühlösung bei Zuführung in die Zerstäubungsvorrichtung 80 °C bis 300 °C, vorzugsweise 90 °C bis 250 °C beträgt.

Als feste Lösung wird erfindungsgemäß ein Zustand bezeichnet, bei dem der Wirkstoff (d.h. das Pestizid) molekulardispers verteilt in einer Matrix aus Hilfsstoffen vorliegt. In diesem Zustand sind röntgendiffraktometrisch keine kristallinen Anteile des Wirkstoffs mehr festzustellen. Da die Nachweisgrenze für kristalline Anteile bei der Röntgendiffraktometrie bei 3 Gew.-% liegt, bedeutet der Ausdruck "keine kristallinen Anteile",dass weniger als 3 Gew.- % kristalline Anteile vorhanden sind. Der Zustand der molekulardispersen Verteilung kann mit Hilfe der Methode der Differential Scanning Calorimetry (DSC) ermittelt werden. Bei einer molekulardispersen Verteilung ist im Bereich des Schmelzpunkts des Wirkstoffs kein Schmelzpeak mehr zu beobachten. Die Nachweisgrenze dieser Methode liegt bei 1 Gew.- %.

Als schwerlösliches Pestizid Substanzen im Sinne der Erfindung sind Stoffe zu verstehen, deren Sättigungslöslichkeit bei Raumtemperatur (20°C) in mindestens einem der folgenden Medien kleiner als 1 Gew.-% ist: Wasser, 0,1 molare wässrige Salzsäure, wässriger Phosphatpuffer pH 7,2, 0,9 gew.-%ige wässrige Kochsalzlösung.

Der Begriff Pestizid bezeichnet hier mindestens einen Wirkstoff ausgewählt aus der Gruppe der Insektizide, Fungizide, Herbizide und/oder Safener (s. Pesticide Manual, 13th Ed. (2003)) verwendet wird. Hierbei können auch Kombinationen aus zwei oder mehreren der unten genannten Wirkstoffe verwendet werden.

Die folgende Liste von schwerlöslichen Insektiziden zeigt mögliche Wirkstoffe auf, soll aber nicht auf diese beschränkt sein:
A.1. Organo(thio)phosphate: azinphos-methyl, chlorpyrifos, chlorpyrifos-methyl, chlorfenvinphos, diazinon, disulfoton, ethion, fenitrothion, fenthion, isoxathion, malathion, methidathion, methyl-parathion, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
A.2. Carbamate: alanycarb, bendiocarb, benfuracarb, carbaryl, carbofuran, carbosulfan, fenoxycarb, furathiocarb, methiocarb, methomyl, oxamyl, pirimicarb, thiodicarb, triazamate;
A.3. Pyrethroide: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I und II, resmethrin, silafluofen, tau-fluvalinate, tefluthrin, tetramethrin, tralomethrin, transfluthrin;
A.4. Wachstumsregulatoren: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, a tetronic acid derivative of formula Γ¹, 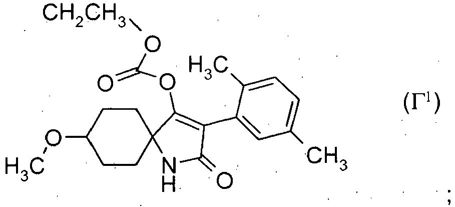
A.5. Nicotin Rezeptor Agonisten/ Antagonisten: clothianidin, dinotefuran, thiacloprid;
A.6. GABA Antagonisten: acetoprole, endosulfan, ethiprole, fipronil, vaniliprole;
A.7. Macrolid-Insektizide: abamectin, emamectin, milbemectin, lepimectin, spinosad;
A.8. METI I Acarizide: fenazaquin, pyridaben, tebufenpyrad, tolfenpyrad;
A.9. METI II and III Verbindung: acequinocyl, fluacyprim, hydramethylnon;
A.10. Entkoppler-Verbindungen: chlorfenapyr;
A.11. Hemmer der oxidativen Phosphorylierung: cyhexatin, diafenthiuron, fenbutatin oxide, propargite;
A.12. Häutungsstörende Verbindungen: cryomazine;
A.13. Hemmer der Mixed-Function-Oxidase: piperonyl butoxide;
A.14. Natriumkanalblocker: indoxacarb, metaflumizone;
A.15. Verschiedene: benclothiaz, bifenazate, flonicamid, pyridalyl, pymetrozine, sulfur, thiocyclam und aminoisothiazole Verbindungen der Formel Γ², 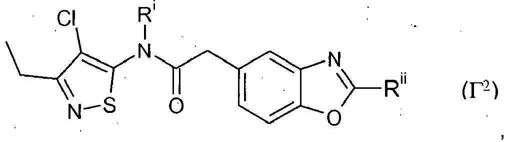 wobei Rⁱ für -CH₂OCH₂CH₃ or H und Rⁱⁱ für CF₂CF₂CF₃ or CH₂CH(CH₃)₃ steht, anthranilamide Verbindungen der Formel Γ³ 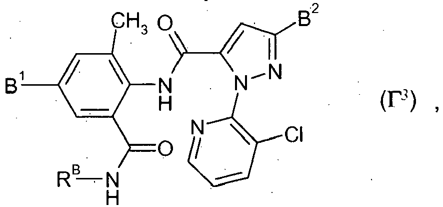 wobei B1 für Wasserstoff oder Chlor, B2 für Brom oder CF3, und RB für CH3 oder CH(CH3)2 steht, und malononitrile Verbindungen wie in JP 2002 284608, WO 02/89579, WO 02/90320, WO 02/90321, WO 04/06677, WO 04/20399, oder JP 2004 99597 beschrieben, N-R'-2,2-dihalo-1-R"cyclo-propanecarboxamide-2-(2,6-dichloro- α,α,α,α-tri-fluoro-p-tolyl)hydrazone oder N-R'-2,2-di(R"')propionamide-2-(2,6-dichloro- α,α,α,α-trifluoro-p-tolyl)-hydrazone, worin R' für methyl oder ethyl stehen, halo für Chlor oder Brom steht, R" für Wasserstoff oder methyl und R'" für methyl oder ethyl stehen;

Die folgende Liste von schwerlöslichen Fungiziden zeigt mögliche Wirkstoffe auf, soll aber nicht auf diese beschränkt sein:
1. Strobilurine Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethyl ester, 2-(ortho-((2,5-Dimethylphenyl-oxymethylen)phenyl)-3-methoxy-acrylsäuremethylester;
2. Carbonsäureamide
   - Carbonsäureanilide: Benalaxyl, Benodanil, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluor-methyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-di-chlor-4-fluor-biphenyl-2-yl)-amid, 3,4-Dichlor-isothiazol-5-carbonsäure (2-cyano-phenyl) amid; 3-Difluormethyl-1-methyl-pyrazol-4-carbonsäure-(3',4'-dichlor-5-fluor-biphenyl-2-yl)-amid, 3-Difluormethyl-1-methyl-1 H-pyrazol-4-carbonsäure-(2-bicyclopropyl-2-yl-phenyl)amid)
   - Carbonsäuremorpholide: Dimethomorph, Flumorph;
   - Benzoesäureamide: Flumetover, Fluopicolide (Picobenzamid), Zoxamide;
   - Sonstige Carbonsäureamide: Carpropamid, Diclocymet, Mandipropamid, N-(2-(4-[3-(4-Chlor-phenyl)-prop-2-inyloxy]-3-methoxy-phenyl)-ethyl)-2-methansulfonylamino-3-methyl-butyramid, N-(2-(4-[3-(4-Chlor-phenyl)-prop-2-inyloxy]-3-methoxy-phenyl)-ethyl)-2-ethansulfonylamino-3-methyl-butyramid, 3-Difluormethyl-1-methyl-pyrazol-4-carbonsäure-(3',4'-dichlor-5-fluor-biphenyl-2-yl)-amid und 3-Difluormethyl-1-methyl-1H-pyrazol-4-carbonsäure-(2-bicyclopropyl-2-yl-phenyl)amid);
   - 1-Methylpyrazol-4-ylcarbonsäureanilide: 3-Trifluormethyl-1-methyl-1H-pyrazol-4-carbonsaure-N-(2'-fluor-4'-chlor-5'-methoxybiphenyl-2-yl)-amid, 3-Trifluormethyl-1-methyl-1H-pyrazol-4-carbonsaure-N-(2'-fluor-4'-chlor-5'-methylbiphenyl-2-yl)-amid, 3-Trifluormethyl-1-methyl-1 H-pyrazol-4-carbonsaure-N-(3',4',5'-trifluorbiphenyl-2-yl)-amid, 3-Trifluormethyl-1-methyl-1 H-pyrazol-4-carbonsaure-N-(2',4',5'-trifluorbiphenyl-2-yl)-amid, 3-Difluormethyl-1-methyl-1 H-pyrazol-4-carbonsaure-N-(2'-fluor-4'-chlor-5'-methoxybiphenyl-2-yl)-amid, 3-Trifluormethyl-1-methyl-1H-pyrazol-4-carbonsaure-N-(2',3',4'-trifluorbiphenyl-2-yl)-amid, 3-Difluormethyl-1-methyl-1Hpyrazol-4-carbonsaure-N-(2'-fluor-4'-chlor-5'-methylbiphenyl-2-yl)-amid, 3-Difluormethyl-1-methyl-1H-pyrazol-4-carbonsaure-N-(3',4',5'-trifluorbiphenyl-2-yl)-amid, 3-Difluormethyl-1-methyl-1 H-pyrazol-4-carbonsaure-N-(2',4',5'-trifluorbiphenyl-2-yl)-amid, 3-Fluormethyl-1-methyl-1H-pyrazol-4-carbonsaure-N-(3',4',5'-frifluorbiphenyl-2-yl)-amid, 3-Chlordifluormethyl-1-methyl-1H-pyrazol-4-carbonsaure-N-(3',4',5'-trifluorbiphenyl-2-yl)-amid, 3-Chlorfluormethyl-1-methyl-1H-pyrazol-4-carbonsaure-N-(3',4',5'-trifluorbiphenyl-2-yl)-amid, 3-Fluormethyl-1-methyl-1 H-pyrazol-4-carbonsaure-N-(2',3',4'-trifluorbiphenyl-2-yl)-amid und 3-Fluormethyl-1-methyl-1 H-pyrazol-4-carbonsaure-N-(2',4',5'-trifluorbiphenyl-2-yl)-amid.
3. Azole
   - Triazole: Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, Ipconazole, Metconazole, Myclobutanil, Penconazole, Propiconazole, Prothioconazole, Simeconazole, Tebuconazole, Tetraconazole, Triadimenol, Triadimefon, Triticonazole;
   - Imidazole: Cyazofamid, Imazalil, Pefurazoate, Prochloraz, Triflumizole;
   - Benzimidazole: Benomyl, Carbendazim, Fuberidazole, Thiabendazole;
   - Sonstige: Ethaboxam, Etridiazole, Hymexazole;
4. Stickstoffhaltige Heterocyclylverbindungen:
   - Pyridine: Fluazinam, Pyrifenox, 3-[5-(4-Chlor-phenyl)-2,3-dimethyl-isoxazolidin-3-yl]-pyridin;
   - Pyrimidine: Bupirimate, Cyprodinil, Ferimzone, Fenarimol, Mepanipyrim, Nuarimol, Pyrimethanil;
   - Piperazine: Triforine;
   - Pyrrole: Fludioxonil, Fenpiclonil;
   - Morpholine: Aldimorph, Dodemorph, Fenpropimorph, Tridemorph;
   - Dicarboximide: Iprodione, Procymidone, Vinclozolin;
   - sonstige: Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Quinoxyfen, Tricyclazole, 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on, 3-(3-Brom-6-fluoro-2-methyl-indol-1-sulfonyl)-[1,2,4]triazol-1-sulfonsäuredimethylamid;
5. Carbamate und Dithiocarbamate
   - Carbamate: Diethofencarb, Flubenthiavalicarb, Iprovalicarb, Propamocarb, 3-(4-Chlor-phenyl)-3-(2-isopropoxycarbonylamino-3-methyl-butyrylamino)-propionsäure-methylester, N-(1-(1-(4-cyanophenyl)ethansulfonyl)-but-2-yl) carbaminsäure-(4-fluor-phenyl)ester;
6. Sonstige Fungizide
   - Organometallverbindungen: Fentin Salze;
   - Schwefelhaltige Heterocyclylverbindungen: Isoprothiolane, Dithianon;
   - Organophosphorverbindungen: Edifenphos, Fosetyl, Fosetyl-aluminium, Iprobenfos, Pyrazophos, Tolclofos-methyl, Phosphorige Säure und ihre Salze;
   - Organochlorverbindungen: Thiophanate Methyl, Chlorothalonil, Dichlofluanid, Tolylfluanid, Flusulfamide, Phthalide, Hexachlorbenzene, Pencycuron, Quintozene;
   - Nitrophenylderivate: Binapacryl, Dinocap, Dinobuton;
   - Sonstige: Spiroxamine, Cyflufenamid, Cymoxanil, Metrafenone.

Die folgende Liste von schwerlöslichen Herbiziden zeigt mögliche Wirkstoffe auf, soll aber nicht auf diese beschränkt sein:
Verbindungen, die die Biosynthese von Lipiden inhibieren, z.B. Chlorazifop, Clodina-fop, Clofop, Cyhalofop, Ciclofop, Fenoxaprop, Fenoxaprop-p, Fenthiaprop, Fluazifop, Fluazifop-P, Haloxyfop, Haloxyfop-P, Isoxapyrifop, Metamifop, Propaquizafop, Quizalofop, Quizalofop-P, Trifop, bzw. deren Esters, Butroxydim, Cycloxydim, Profoxydim, Sethoxydim, Tepraloxydim, Tralkoxydim, Butylate, Cycloat, Diallat, Dimepiperat, EPTC, Esprocarb, Ethiolate, Isopolinate, Methiobencarb, Molinate, Orbencarb, Pebulate, Prosulfocarb, Sulfallat, Thiobencarb, Thiocarbazil, Triallat, Vernolat, Benfuresat, Ethofumesat und Bensulid;

ALS-Inhibitoren wie Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, lodosulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, Imazamethabenz, Imazamox, Imazapic, Imazapyr, Imazaquin, Imazethapyr, Cloransulam, Diclosulam, Florasulam, Flumetsulam, Metosulam, Penoxsulam, Bispyribac, Pyriminobac, Propoxycarbazone, Flucarbazone, Pyribenzoxim, Pyriftalid und Pyrithiobac; sofern der pH Wert < 8 ist

Verbindungen, die die Photosynthese inhibieren wie Atraton, Atrazine, Ametryne, A-ziprotryne, Cyanazine, Cyanatryn, Chlorazine, Cyprazine, Desmetryne, Dimethametryne, Dipropetryn, Eglinazine, Ipazine, Mesöprazine, Methometon, Methoprotryne, Procyazine, Proglinazine, Prometon, Prometryne, Propazine, Sebuthylazine, Secbumeton, Simazine, Simeton, Simetryne, Terbumeton, Terbuthylazine und Terbutryne;

Protoporphyrinogen-IX Oxidase-Inhibitoren wie Acifluorfen, Bifenox, Cchlomethoxyfen, Chlornitrofen, Ethoxyfen, Fluorodifen, Fluoroglycofen, Fluoronitrofen, Fomesafen, Furyloxyfen, Halosafen, Lactofen, Nitrofen, Nitrofluorfen, Oxyfluorfen, Fluazolate, Pyraflufen, Cinidon-ethyl, Flumiclorac, Flumioxazin, Flumipropyn, Fluthiacet, Thidiazimin, O-xadiazon, Oxadiargyl, Azafenidin, Carfentrazone, Sulfentrazone, Pentoxazone, Benzfendizone, Butafenacil, Pyraclonil, Profluazol, Flufenpyr, Flupropacil, Nipyraclofen und Etnipromid;

Herbizide wie Metflurazon, Norflurazon, Flufenican, Diflufenican, Picolinafen, Beflubutamid, Fluridone, Flurochloridone, Flurtamone, Mesotrione, Sulcotrione, Isoxachlortole, Isoxaflutole, Benzofenap, Pyrazolynate, Pyrazoxyfen, Benzobicyclon, amitrole, clomazone, Aclonifen, 4-(3-trifluormethylphenoxy)- 2-(4-trifluoromethylphenyl)pyrimidin, und 3-heterocyclyl-substituierte Benzoylderivate der Formel (vgl. WO-A-96/26202, WO-A-97/41116, WO-A-97/41117 und WO-A-97/41118) 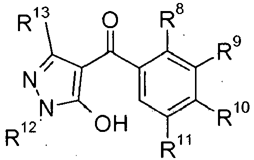 worin die Substituenten R⁸ to R¹³ folgende Bedeutung haben:
R⁸, R¹⁰ Wasserstoff, Halogen, C₁-C₆-Alkyl, C₁-C₆-Haloalkyl, C₁-C₆-Alkoxy, C₁-C₆-Haloalkoxy, C₁-C₆-Alkylthio, C₁-C₆-Alkylsulfinyl oder C₁-C₆-Alkylsulfonyl;
R⁹ bedeutet ein heterocyclisches Radikal aus der Gruppe bestehend aus Thiazol-2-yl, thiazol-4-yl, Thiazol-5-yl, Isoxazol-3-yl, Isoxazol-4-yl, Isoxazol-5-yl, 4,5-dihydroisoxazol-3-yl, 4,5-dihydroisoxazol-4-yl und 4,5-dihydroisoxazol-5-yl, worin die genannten Radikale einen oder mehrere Substituenten tragen können z.B. mono-, di-, tri- or tetrasubstituiert sein können durch Halogen, C₁-C₄-Alkyl, C₁-C₄-Alkoxy, C₁-C₄-Haloalkyl, C₁-C₄-Haloalkoxy oder C₁-C₄-Alkylthio;
R¹¹ = Wasserstoff, Halogen oder C₁-C₆-Alkyl;
R¹² = C₁-C₆-Alkyl;
R¹³ = Wasserstoff oder C₁-C₆-Alkyl.
Sofern der pH Wert < 8 ist.

Mitose-Inhibitoren wie Benfluralin, Butralin, Dinitramine, Ethalfluralin, Fluchloralin, i-Sopropalin, Methalpropalin, Nitralin, Oryzalin, Pendimethalin, Prodiamine, Profluralin, Trifluralin, Amiprofos-methyl, Butamifos, Dithiopyr, Thiazopyr, Propyzamide, Chlorthal, Carbetamide, Chlorpropham and Propham;
VLCFA-Inhibitoren wie Acetochlor, Alachlor, Butachlor, Butenachlor, Delachlor, Diethatyl, Dimethachlor, Dimethenamid, Dimethenamid-P, Metazachlor, Metolachlor, S-Metolachlor, Pretilachlor, Propisochlor, Prynachlor, Terbuchlor, Thenylchlor, Xylachlor, CDEA, Epronaz, Diphenamid, Napropamide, Naproanilide, Pethoxamid, Flufenacet, Mefenacet, Fentrazamide, Anilofos, Piperophos, Cafenstrole, Indanofan und Tridiphan;
Inhibitoren für die Biosynthese von Cellulose wie Dichlobenil, Chlorthiamid, Isoxaben und Flupoxam;
Herbizide wie Dinofenat, Dinoprop, Dinosam, Dinoseb, Dinoterb, DNOC, Etinofen und Medinoterb;
außerdem: Benzoylprop, Flamprop, Flamprop-M, Bromobutide, Chlorflurenol, Cinmethylin, Methyldymron, Etobenzanid, Pyributicarb, Oxaziclomefone, Triaziflam und Methyl bromide.

Die folgende Liste zeigt mögliche schwerlösliche Safener auf, soll aber nicht auf diese beschränkt sein:
benoxacor, cloquintocet, cyometrinil, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloroacetyl)-1,3-oxazolidine (R-29148), 4-(dichloroacetyl)-1-oxa-4-azaspiro[4.5]decane (AD-67; MON 4660) und oxabetrinil.

Bevorzugte Fungizide sind Triazole wie Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, Ipconazole, Metconazole, Myclobutanil, Penconazole, Propiconazole, Prothioconazole, Simeconazole, Tebuconazole, Tetraconazole, Triadimenol, Triadimefon, Triticonazole, Strobilurine wie sowie Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethyl ester, 2-(ortho-((2,5-Dimethylphenyl-oxymethylen)phenyl)-3₋methoxy-acrylsäuremethylester sowie 5-Chlor-7-(4-methyl-piperidin-1-yl)-6-(2,4,6-trifluor-phenyl)-[1,2,4]triazolo[1,5-a]pyrimidin und Boscalid. In einer weiteren bevorzugten Ausführungsform sind 1-Methylpyrazol-4-ylcarbonsäureanilide bevorzugt.

Ganz besonders bevorzugte Fungizide sind Epoxiconazole, Metconazole, Pyraclostrobin, Kresoxim-methyl und 5-Chlor-7-(4-methyl-piperidin-1-yl)-6-(2,4,6-trifluor-phenyl)-[1,2,4]triazolo[1,5-a]pyrimidin und Boscalid. In einer weiteren ganz besonders bevorzugten Ausführungsform sind 3-Trifluormethyl-1-methyl-1H-pyrazol-4-carbonsaure-N-(2'-fluor-4'-chlor-5'-methoxybiphenyl-2-yl)-amid, 3-Trifluormethyl-1-methyl-1H-pyrazol-4-carbonsaure-N-(2'-fluor-4'-chlor-5'-methylbiphenyl-2-yl)-amid, 3-Trifluormethyl-1-methyl-1H-pyrazol-4-carbonsaure-N-(3',4',5'-trifluorbiphenyl-2-yl)-amid, 3-Trifluormethyl-1-methyl-1 H-pyrazol-4-carbonsaure-N-(2',4',5'-trifluorbiphenyl-2-yl)-amid, 3-Difluormethyl-1-methyl-1H-pyrazol-4-carbonsaure-N-(2'-fluor-4'-chlor-5'-methoxybiphenyl-2-yl)-amid, 3-Trifluormethyl-1-methyl-1H-pyrazol-4-carbonsaure-N-(2',3',4'-trifluorbiphenyl-2-yl)-amid, 3-Difluormethyl-1-methyl-1Hpyrazol-4-carbonsaure-N-(2'-fluor-4'-chlor-5'-methylbiphenyl-2-yl)-amid, 3-Difluormethyl-1-methyl-1H-pyrazol-4-carbonsaure-N-(3',4',5'-trifluorbiphenyl-2-yl)-amid, 3-Difluormethyl-1-methyl-1H-pyrazol-4-carbonsaure-N-(2',4',5'-trifluorbiphenyl-2-yl)-amid, 3-Fluormethyl-1-methyl-1H-pyrazol-4-carbonsaure-N-(3',4',5'-trifluorbiphenyl-2-yl)-amid, 3-Chlordifluormethyl-1-methyl-1H-pyrazol-4-carbonsaure-N-(3',4',5'-trifluorbiphenyl-2-yl)-amid, 3-Chlorfluormethyl-1-methyl-1 H-pyrazol-4-carbonsaure-N-(3',4',5'-trifluorbiphenyl-2-yl)-amid, 3-Fluormethyl-1-methyl-1H-pyrazol-4-carbonsaure-N-(2',3',4'-trifluorbiphenyl-2-yl)-amid und 3-Fluormethyl-1-methyl-1 H-pyrazol-4-carbonsaure-N-(2',4',5'-trifluorbiphenyl-2-yl)-Amid bevorzugt.

In einer weiteren bevorzugten Ausführungsform sind Mischungen von Fungiziden bevorzugt, die mindestens ein Azol umfassen. Bevorzugt sind Mischungen umfassend Epoxiconazol und Metconazol; und Mischungen umfassend mindestens ein Azol und mindestens ein Strobilurin, insbesondere Epoxiconazol und Pyraclostrobin.

In einer weiteren bevorzugten Ausführungsform sind Mischungen von Fungiziden bevorzugt, die mindestens ein 1-Methylpyrazol-4-ylcarbonsäureanilid umfassen. Bevorzugt sind Mischungen von mindestens einem 1-Methylpyrazol-4-ylcarbonsäureanilid und mindestens einem Azol, wobei ein Azol bevorzugt Metconazol oder Epoxiconazol ist; oder
mindestens einem 1-Methylpyrazol-4-ylcarbonsäureanilid und mindestens einem Strobilurin, wobei ein Strobilurin bevorzugt Pyraclostrobin ist; oder
mindestens einem 1-Methylpyrazol-4-ylcarbonsäureanilid, mindestens einem Azol und mindestens einem Strobilurin, wobei ein Azol bevorzugt Metconazol oder Epoxiconazol ist; und wobei ein Strobilurin bevorzugt Pyraclostrobin ist.

Bevorzugte Insektizide sind Metaflumizon, Fipronil und alpha-Cypermethrin.

Die nach dem erfindungsgemäßen Verfahren hergestellten festen Lösungen können die folgende mengerimäßige Zusammensetzung aufweisen:
(i) 1 bis 50 Gew.-% mindestens eines schwerlöslichen Pestizides,
(ii) 10 bis 99 Gew.-% mindestens eines wasserlöslichen Matrixhilfsstoffs
(iii) 0 bis 30 Gew.-% eines oder mehrerer Tenside / Solubilisatoren,
(iv) 0 bis 50 Gew.-% weiterer Hilfsstoffe,
wobei sich die Mengen der Komponenten (i) bis (v) zu 100 Gew.-% addieren.

Der Ausdruck mindestens eines schwerlöslichen Pestizides bedeudet, dass ein, zwei oder mehr Pestizide eingesetzt werden können. Vorzugsweise werden ein oder zwei Pestizide eingesetzt.

Als matrixaufbauende Hilfsstoffe sind grundsätzlich alle Stoffe geeignet, die in der Lage sind, mit Wirkstoffen feste Lösungen zu bilden.

Geeignet sind beispielsweise wasserlösliche Polymere aus folgenden Strukturklassen
Polyvinylpyrrolidon, Vinylpyrrolidon-Vinylacetat-Copolymere, Polyvinylcaprolactame, Polyvinylformamid, Polyvinylacetamid, Polyacrylate, Polymethacrylate, Polyacrylamide, Polyethylenimine, Polyvinylamine, Hydroxyalkylcellulosen, Alkylhydroxyalkylcellulosen, Carboxyalkylcellulosen, Alkylhydroxyalkylcelluloseacetatsuccinate, Alkyl-hydroxyalkylcelluloseacetatphthalate, Alkylhydroxyalkylcellulosephthalate, Celluloseacetatphthalate, Stärken, Hydroxyalkylstärken, Carboxyalkylstärken, modifizierte Stärke, Octenylsuccinatstärken, Dextrane, Polyoxyethylen-polyoxypropylen-Blockcopolomere, Polyethylenoxide, Polypropylenoxide, und Polyaminosäuren.

Ebenfalls als matrixaufbauende Hilfsstoffe sind Polymerzusammensetzungen geeignet, wie sie in der WO06/084680 beschrieben sind, die durch Umsetzung von
a) wenigstens einem Polymer P1*, das gegenüber Isocyanatgruppen reaktive funktionelle Gruppen R1 trägt und das aus ethylenisch ungesättigten Monomeren M1 aufgebaut ist, wobei die Monomere M1* mehr als 20 Gew.-%, bezogen auf die Gesamtmenge der Monomere M1*, Monomere M1*a umfassen, die wenigstens eine funktionelle Gruppe FG aufweisen, die unter tertiären Aminogruppen, Iminogruppen, Carboxyamidgruppen, Nitrilgruppen, Lactamgruppen, Ketogruppen, Aldehydgruppen, Harnstoffgruppen, Polyethergruppen, Carboxylgruppen, Sulfonylgruppen, Hydroxysulfonylgruppen und Sulfonamidgruppen ausgewählt ist,
b) wenigstens einem Poly-C₂-C₄-alkylenether P2*, der gegenüber Isocyanatgruppen reaktive funktionelle Gruppen R2 trägt,
c) mit wenigstens einer Isocyanatgruppen enthaltenden Verbindung V, die bezüglich der Isocyanatgruppen eine Funktionalität von wenigstens 1,5 aufweist.
erhältlich sind.

Der Begriff "Funktionalität" steht hier und im Folgenden für die mittlere Anzahl der jeweiligen funktionellen Gruppen R1 bzw. R2 pro Molekül bzw. pro Polymerkette.

Als Polymere P1* kommen grundsätzlich alle aus ethylenisch ungesättigten Monomeren M1* aufgebauten Polymere in Betracht, welche die geforderte Anzahl an reaktiven Gruppen R1 aufweisen und deren konstituierende Monomere M1* mehr als 20 Gew.-%, insbesondere wenigstens 25 Gew.-%, besonders bevorzugt wenigstens 30 Gew.-% und ganz besonders bevorzugt zu wenigstens 35 Gew.-% funktionalisierte Monomere M1*a umfassen. Der Anteil der Monomere M1*a an den Monomeren M1* kann bis zu 100 Gew.-% betragen und liegt vorteilhafterweise im Bereich von 25 bis 90 Gew.-%, insbesondere im Bereich von 30 bis 80 Gew.-% besonders bevorzugt im Bereich von 30 bis 70 Gew.-% und ganz besonders bevorzugt im Bereich von 35 bis 60 Gew.-%.

Die Monomere M1*a besitzen neben der ethylenisch ungesättigten Doppelbindung eine oder mehrere, z.B. ein oder zwei funktionelle Gruppen FG. Diese verleiht den Monomeren M1*a in der Regel eine erhöhte Wasserlöslichkeit. Die Wasserlöslichkeit der Monomere M1*a beträgt daher häufig wenigstens 50 g/l und insbesondere wenigstens 80 g/l bei 25 °C und 1013 mbar.

Die Monomere M1*a können sowohl sauer bzw. anionisch, als auch basisch oder neutral sein.

In einer ersten bevorzugten Ausführungsform umfassen die Monomere M1*a im wesentlichen nur neutrale Monomere M1*a.

In einer zweiten bevorzugten Ausführungsform umfassen die Monomere M1*a im wesentlichen nur basische Monomere M1*a.

In einer dritten bevorzugten Ausführungsform umfassen die Monomere M1*a im wesentlichen nur saure Monomere M1*a

In einer vierten bevorzugten Ausführungsform umfassen die Monomere M1*a im wesentlichen eine Mischung aus neutralen und basischen Monomere M1*a. In dieser Ausführungsform liegt das Gewichtsverhältnis von neutralen zu basischen Monomeren vorzugsweise im Bereich von 1:10 bis 10:1 und insbesondere im Bereich von 5:1 bis 1:2.

In einer fünften bevorzugten Ausführungsform umfassen die Monomere M1*a im wesentlichen eine Mischung aus neutralen und sauren Monomere M1*a. In dieser Ausführungsform liegt das Gewichtsverhältnis von neutralen zu sauren Monomeren vorzugsweise im Bereich von 1:10 bis 10:1 und insbesondere im Bereich von 5:1 bis 1:2.

Unter den Ausführungsformen 1 bis 5 sind die Ausführungsformen 1, 2 und 4 besonders bevorzugt.

Im wesentlichen bedeutet hier wenigstens 90 Gew.-%, und insbesondere wenigstens 95 Gew.-%, bezogen auf das Gewicht der Monomere M1*a.

Zu den neutralen Monomeren M1*a zählen beispielsweise
- Amide und C₁-C₄-Alkyloxyalkylamide monoethylenisch ungesättigter C₃-C₈-Monocarbonsäuren wie Acrylamid, Methacrylamid, N-(Methoxymethyl)(meth)acrylamid, N-(Ethoxymethyl)(meth)acrylamid, N-(2-Methoxyethyl)(meth)acrylamid, N-(2-Ethoxyethyl)(meth)acrylamid und dergleichen;
- monoethylenisch ungesättigte Nitrile wie Acrylnitril und Methacrylnitril;
- N-Vinylamide aliphatischer, cycloaliphatischer oder aromatischer Carbonsäuren, insbesondere N-Vinylamide aliphatischer Carbonsäuren mit 1 bis 4 C-Atomen wie N-Vinylformamid, N-Vinylacetamid, N-Vinylpropionsäureamid und N-Vinylbutyramid;
- N-Vinyllactame mit 5 bis 7 Ringatomen, z. B. N-Vinylpyrrolidon, N-Vinylpiperidon, N-Vinylmorpholinon und N-Vinylcaprolactam;
- monoethylenisch ungesättigte, Harnstoffgruppen tragende Monomere wie N-Vinyl- und N-Allylharnstoff sowie Derivate des Imidazolidin-2-ons, z.B. N-Vinyl- und N-Allylimidazolidin-2-on, N-Vinyloxyethylimidazolidin-2-on, N-Allyloxyethylimidazolidin-2-on N-(2-Acrylamidoethyl)imidazolidin-2-on, N-(2-Acryloxyethyl)imidazolidin-2-on, N-(2-Methacrylamidoethyl)imidazolidin-2-on, N-(2-Methacryloxyethyl)imidazolidin-2-on (= Ureidomethacrylat), N-[2-(Acryloxyacetamido)ethyl]imidazolidin-2-on N-[2-(2-Acryloxyacetamido)ethyl]imidazolidin-2-on N-[2-(2-Methacryloxyacetamido)ethyl]imidazolidin-2-on;
- Aldehyd- oder Ketogruppen aufweisende monoethylenisch ungesättigte Monomere wie 3-(Acrylamido)-3-methylbutan-2-on (Diacetonacrylamid), 3-(Methacrylamido)-3-methylbutan-2-on, 2,4-Dioxapentylacrylat und 2,4-Dioxapentylmethacrylat;

Bevorzugte neutrale Monomere sind N-Vinyllactame, insbesondere N-Vinylpyrrolidon sowie Harnstoffgruppen tragende Monomere, insbesondere N-(2-Acrylamidoethyl)-imidazolin-2-on und N-(2-Methacrylamidoethyl)-imidazolin-2-on.

Zu den basischen Monomeren M1*a zählen beispielsweise
- vinyl-substituierten Stickstoffheteroaromaten wie 2-, 3- und 4-Vinylpyridin, N-Vinylimidazol; und
- monoethylenisch ungesättigte Monomere mit einer primären, sekundären oder tertiären Aminogruppe, insbesondere Monomere der allgemeinen Formel I* 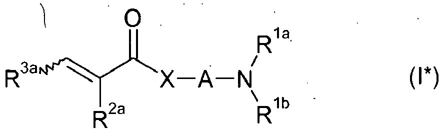
worin
- X: für Sauerstoff oder eine Gruppe N-R^{4a} steht;
- A: für C₂-C₈-Alkylen, z. B. 1,2-Ethandiyl, 1,2- oder 1,3-Propandiyl, 1,4-butandiyl oder 2-Methyl-1,2-propandiyl, das gegebenenfalls durch 1, 2 oder 3 nicht benachbarte Sauerstoffatome unterbrochen ist, wie in 3-Oxapentan-1,5-diyl, steht;
- R^{1a}, R^{1b}: unabhängig voneinander für Wasserstoff, C₁-C₁₀-Alkyl, C₅-C₁₀-Cycloalkyl, Phenyl oder Phenyl-C₁-C₄-alkyl stehen und insbesondere beide jeweils C₁-C₄-Alkyl bedeuten;
- R^{2a}: Wasserstoff oder C₁-C₄-Alkyl, insbesondere Wasserstoff oder Methyl, bedeutet;
- R^{3a}: Wasserstoff oder C₁-C₄-Alkyl und insbesondere Wasserstoff bedeutet; und
- R^{4a}: Wasserstoff oder C₁-C₄-Alkyl und insbesondere Wasserstoff bedeutet.

Beispiele für Monomere der Formel I* sind 2-(N,N-Dimethylamino)ethylacrylat, 2-(N,N-Dimethylamino)ethylmethacrylat, 2-(N,N-Dimethylamino)ethylacrylamid, 3-(N,N-Dimethylamino)propylacrylat, 3-(N,N-Dimethylamino)propylmethacrylat, 3-(N,N-Dimethylamino)propylacrylamid, 3-(N,N-Dimethylamino)propylmethacrylamid und 2-(N,N-Dimethylamino)ethylmethacrylamid, wobei 3-(N,N-Dimethylamino)propylmethacrylat besonders bevorzugt ist.

Bevorzugte basische Monomere M1*a sind die Monomere der allgemeinen Formel I*.

Zu den Monomeren M1*a zählen weiterhin anionische bzw. saure monoethylenisch ungesättigte Monomere. Beispiele hierfür sind:
- monoethylenisch ungesättigte Monomere, die eine Sulfonsäuregruppe aufweisen, sowie die Salze derartiger Monomere, insbesondere die Alkalimetallsalze, z. B. die Natrium- oder Kaliumsalze sowie die Ammoniumsalze. Hierzu zählen ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze;
- ethylenisch ungesättigte Phosphonsäuren, wie Vinylphosphonsäure und Vinylphosphonsäuredimethylester und deren Salze; und
- monoethylenisch ungesättigte Monomere, die eine oder zwei Carboxylgruppen tragen, z.B. α,β-ethylenisch ungesättigte C₃-C₈-Mono- und C₄-C₈-Dicarbonsäuren, insbesondere Acrylsäure, Methacrylsäure, Crotonsäure, Maleinsäure, Fumarsäure und Itaconsäure.

Bevorzugte saure Monomere M1*a sind die vorgenannten monoethylenisch ungesättigte Monomere mit einer oder zwei Carboxylgruppen.

Neben den Monomeren M1*a kann das Polymerisat auch bis zu < 80 Gew.-% ethylenisch ungesättigte Monomere einpolymerisiert enthalten, die von den Monomeren M1*a verschieden sind. Bevorzugt handelt es sich hierbei um neutrale, monoethylenisch ungesättigte Monomere M1*b, die eine begrenzte Löslichkeit in Wasser von vorzugsweise nicht mehr als 30 g/l und insbesondere nicht mehr als 20 g/l bei 25°C und 1 bar aufweisen. Man vermutet, dass diese Monomere aufgrund hydrophober Wechselwirkungen die Bildung der Wirkstoff-Polymer-Aggregate fördern. Daher enthalten die Polymere P1*, bezogen auf das Gesamtgewicht der Monomere M1*, vorzugsweise bis 10 bis 75 Gew.-%, insbesondere bis 20 bis 70 Gew.-%, besonders bevorzugt 30 bis 70 Gew.-% und speziell 40 bis 65 Gew.-% Monomere M1*b einpolymerisiert.

Zu den Monomeren M1*b zählen insbesondere Monomere der allgemeinen Formel II* 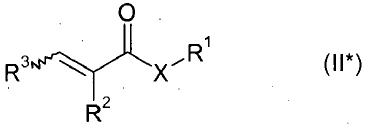 worin
- X: für Sauerstoff oder eine Gruppe N-R⁴ steht;
- R¹: C₁-C₁₀C₂₀-Alkyl, C₅-C₁₀-Cycloalkyl, Phenyl, oder Phenyl-C₁-C₄-alkyl oder Phenoxy-C₁-C₄-alkyl steht;
- R²: Wasserstoff oder C₁-C₄-Alkyl bedeutet;
- R³: Wasserstoff oder C₁-C₄-Alkyl bedeutet; und
- R₄: Wasserstoff oder C₁-C₄-Alkyl bedeutet.

Bevorzugte Monomere der allgemeinen Formel II* sind solche, worin R³ in Formel II* für Wasserstoff steht. In Formel II* steht R² steht vorzugsweise für Wässerstoff oder Methyl. X steht in Formel II* vorzugsweise für O, NH, NCH₃ oder NC₂H₅. und besonders bevorzugt für O.

R¹ in Formel II* steht vorzugsweise für
- C₂C₁-C₁₀C₂₀-Alkyl, insbesondere C₁-C₁₀-Alkyl wie Ethyl, n-Propyl, iso-Propyl, n-Butyl, 2-Butyl, Isobutyl, tert.-Butyl, 1-Pentyl, 2-Pentyl, Neopentyl, n-Hexyl, 2-Hexyl, n-Octyl, 2-Ethylhexyl, 2-Propylheptyl oder, n-Decyl, Lauryl oder Stearyl,
- C₅-C₁₀-Cycloalkyl wie Cyclopentyl, Cyclohexyl oder Methylcyclohexyl, oder
- Phenyl-C₁-C₄-alkyl wie Benzyl, 1- oder 2-Phenylethyl, 1-, 2- oder 3-Phenylpropyl oder
- Phenoxy-C₂-C₄-alkyl wie 2-Phenoxyethyl.

Insbesondere steht R¹ für C₂-C₁₀-Alkyl. Ebenfalls bevorzugt steht R¹ für Methyl oder 2-Phenoxyethyl.

Besonders bevorzugte Monomere der Formel II* sind die Ester der Acrylsäure mit C₂-C₁₀-Alkanolen (= C₂-C₁₀-Alkylacrylate) wie Ethylacrylat, n-Butylacrylat, Isobutylacrylat, tert.-Butylacrylat, n-Hexylacrylat, 2-Ethylhexylacrylat und 3-Propylheptylacrylat, die Ester der Methacrylsäure mit C₁-C₁₀-Alkanolen wie Methylmethacrylat, Ethylmethacrylat, n-Butylmethacrylat, Isobutylmethacrylat, tert.-Butylmethacrylat und n-Hexylmethacrylat. Bevorzugte Monomere M1*a M1*b sind außerdem Ester der Acrylsäure und der Methacrylsäure mit 2-Phenoxyethanol wie 2-Phenoxyethylacrylat. Bevorzugte Monomere M1*b sind außerdem die N-(C₂-C₁₀-Alkyl)amide der Acrylsäure und der Methacrylsäure sowie die N-(C₁-C₂-Alkyl)-N-(C₂-C₁₀-alkyl)amide der Acrylsäure und der Methacrylsäure, z. B. N-Ethylacrylamid, N,N-Diethylacrylamid, N-Butylacrylamid, N-Methyl-N-propylacrylamid, N-(n-Hexyl)acrylamid, N-(n-Octylacrylamid) und die entsprechenden Methacrylamide. Insbesondere umfassen die Monomere M1*b wenigstens 50 Gew.-%, insbesondere wenigstens 70 Gew.-%, bezogen auf die Gesamtmenge der Monomere M1*a wenigstens eines C₁-C₄-Alkylmethacrylats (R¹ = C₁-C₄-Alkyl, R² = CH₃ und R³ = H), und hierunter besonders bevorzugt Methylmethacrylat und tert.-Butylmethacrylat.

Zu den Monomeren M1*b zählen weiterhin
- vinylaromatische Monomere wie Styrol, α-Methylstryrol, Vinyltoluol, etc.,
- Olefine mit 2 bis 20 C-Atomen, vorzugsweise α-Olefine mit 3 bis 10 C-Atomen wie Propen, 1-Buten, 1-Penten, 1-Hexen, 1-Octen, Diisobuten und 1-Decen,
- Vinylester aliphatischer Carbonsäuren wie Vinylacetat, Vinylpropionat, Vinyllaurat, Vinylnonanoat, Vinyldecanoat, Vinyllaurat und Vinylstearat,
- halogenierte Olefine wie Vinylchlorid,
- C₁₁-C₂₀-Alkylester monoethylenisch ungesättigter Monocarbonsäuren mit vorzugsweise 3 bis 6 C-Atomen, z. B. C₁₁-C₂₀-Alkylacrylate und C₁₁-C₂₀-Alkylmethacrylate wie Laurylacrylat, Laurylmethacrylat, Isotridecylacrylat, Isotridecylmethacrylat, Stearylacrylat, Stearylmethacrylat,
- Di-C₁-C₂₀-Alkylester ethylenisch ungesättigter Dicarbonsäuren mit vorzugsweise 4 bis 8 C-Atomen, z. B. Di-C₁-C₂₀-Alkylester der Fumarsäure und der Maleinsäure wie Dimethylfumarat, Dimethylmaleat, Dibutylfumarat und Dibutylmaleat,
- Glycidylester monoethylenisch ungesättigter Monocarbonsäuren mit vorzugsweise 3 bis 6 C-Atomen, wie Glycidylacrylat und Glycidylmethacrylat.

Bevorzugte Monomere M1*b sind die Monomere der allgemeinen Formel II* sowie weiterhin vinylaromatische Monomere und hierunter insbesondere Styrol. Bevorzugte Monomere M1*b sind auch Mischungen der vorgenannten Monomere M1*b, die überwiegend, insbesondere wenigstens 60 Gew.-% und besonders bevorzugt 70 Gew.-%; z. B. 60 bis 99 Gew.-% oder 70 bis 99 Gew.-%, bezogen auf die Gesamtmenge der Monomere M1*b, Monomere der allgemeinen Formel II* oder eine Mischung der Monomere II mit Styrol sowie wenigstens ein davon verschiedenes Monomer M1*b umfassen.

Neben den Monomeren M1*a und M1*b können die Polymere P1* bis zu 20 Gew.-%, insbesondere nicht mehr als 10 Gew.-%, bezogen auf die Gesamtmenge der Monomere M1*, ethylenisch ungesättigte Monomeren M1*c, die von den Monomeren M1*a und M1*b verschieden sind, einpolymerisiert enthalten.

Zu den Monomeren M1*c zählen weiterhin monoethylenisch ungesättigte Monomere M1*c.k, die wenigstens eine kationische Gruppe aufweisen. Zu den Monomeren M1*c.k zählen insbesondere solche, die eine quartäre Ammoniumgruppe oder eine quafernisierte Iminogruppe aufweisen. Beispiele für Monomere mit einer quaternisierten Iminogruppe sind N-Alkylvinylpyridiniumsalze und N-Alkyl-N'-vinylimidazoliniumsalze wie N-Methyl-N'-vinylimidazoliniumchlorid oder Metosulfat. Unter den Monomeren M1*c.k werden insbesondere die Monomere der allgemeinen Formel III* bevorzugt 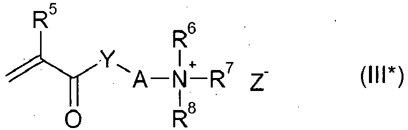 worin
- R⁵: Wasserstoff oder C₁-C₄-Alkyl, insbesondere Wasserstoff oder Methyl,
- R⁶, R⁷ und R⁸: unabhängig voneinander C₁-C₄-Alkyl, insbesondere Methyl, und
- Y: für Sauerstoff, NH oder NR⁹ mit R⁹ = C₁-C₄-Alkyl steht,
- A: für C₂-C₈-Alkylen, z. B. 1,2-Ethandiyl, 1,2- oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, wie in 3-Oxapentan-1,5-diyl, steht und
- Z⁻: für ein Anionenäquivalent, z. B. für Cl⁻, HSO₄⁻, ½ SO₄²⁻ oder CH₃OSO₃⁻ etc. steht,

Beispiele für derartige Monomere M1*c.k sind
2-(N,N,N-Trimethylammonium)ethylacrylat-Chlorid,
2-(N,N,N-Trimethylammonium)ethylmethacrylat-Chlorid,
2-(N,N,N-Trimethylammonium)ethylmethacrylamid-Chlorid,
3-(N,N,N-Trimethylammonium)propylacrylat-Chlorid,
3-(N,N,N-Trimethylammonium)propylmethacrylat-Chlorid,
3-(N,N,N-Trimethylammonium)propylacrylamid-Chlorid,
3-(N,N,N-Trimethylammonium)propylmethacrylamid-Chlorid,
2-(N,N,N-Trimethylammonium)ethylacrylamid-Chlorid, sowie die entsprechenden Metosulfate und Sulfate.

Der Anteil der Monomere M1*c.k an den Monomeren M1* beträgt vorteilhafterweise nicht mehr als 20 Gew.-%, z.B. 0,1 bis 20 Gew.-%, insbesondere 0,5 bis 15 Gew.-%, und speziell 1 bis 10 Gew.-%. In einer bevorzugten Ausführungsform enthält das Polymer P1* keine oder nicht mehr als 0,1 Gew.% Monomere M1*c.k einpolymerisiert.

Zu den Monomeren M1*c zählen auch Monomere M1*c.v, die zwei oder mehrere, nicht konjugierte ethylenisch ungesättigte Doppelbindungen aufweisen. Der Anteil derartiger Monomere M1*c.v wird in der Regel nicht mehr als 2 Gew.-% und insbesondere nicht mehr als 0,5 Gew.-%, bezogen auf die Gesamtmonomermenge M1* betragen. Beispiele hierfür sind Vinyl- und Allylester monoethylenisch ungesättigter Carbonsäuren wie Allylacrylat und Allylmethacrylat, Di- und Polyacrylate von Di- oder Polyolen wie Ethylenglykoldiacrylat, Ethylenglykoldimethacrylat, Butandioldiacrylat, Butandioldimethacrylat, Hexandioldiacrylat, Hexandioldimethacrylat, Triethylenglykoldiacrylat, Triethylenglykoltrimethacrylat, Tris(hydroxymethyl)ethantriacrylat und -trimethacrylat, Pentaerythrittriacrylat und -trimethacrylat, ferner die Allyl- und Methallylester von polyfunktionellen Carbonsäuren, wie Diallylmaleat, Diallylfumarat, Diallylphthalat. Typische Monomere M1*c.3 sind auch Verbindungen, wie Divinylbenzol, Divinylharnstoff, Diallylharnstoff, Triallylcyanurat, N,N'-Divinyl- und N,N'-Diallylimidazolidin-2-on, sowie Methylenbisacrylamid und Methylenbismethacrylamid.

In einer besonders bevorzugten Ausführungsform 2a enthält das Polymer P1*, bezogen auf die Gesamtmenge der Monomere M1*,
20 bis 80 Gew.-%, insbesondere 25 bis60 Gew.-% basische Monomere M1*a, und 20 bis 80 Gew.-%, insbesondere 40 bis 75 Gew.-% Monomere M1*b einpolymerisiert.

In der Ausführungsform 2a sind bevorzugte Monomere M1*a vinyl-substituierten Stickstoffheteroaromaten, speziell die vorgenannten Vinylpyridine und die Monomere der Formel I*. Besonders bevorzugte Monomere M1*a sind die Monomere der Formel I*.

In der Ausführungsform 2a sind bevorzugte Monomere M1*b die Monomere der allgemeinen Formel II sowie weiterhin vinylaromatische Monomere und hierunter insbesondere Styrol. Bevorzugte Monomere M1*b sind auch Mischungen der vorgenannten Monomere M1*b, die überwiegend, insbesondere wenigstens 60 Gew.-% und besonders bevorzugt 70 Gew.-%, z. B. 60 bis 99 Gew.-% oder 70 bis 99 Gew.-%, bezogen auf die Gesamtmenge der Monomere M1*b, Monomere der allgemeinen Formel II oder eine Mischung der Monomere II mit Styrol sowie wenigstens ein davon verschiedenes Monomer M1*b umfassen. Insbesondere umfassen die Monomere M1*b ausschließlich oder nahezu ausschließlich (> 95 Gew.-%) Monomere der allgemeinen Formel II und speziell eine Mischung aus zwei oder mehr verschiedenen Estern der Acrylsäure oder der Methacrylsäure (R² = H oder Methyl, R³ = H und X = O).

In einer bevorzugten Ausführungform handelt es sich bei den Monomere M1*b um eine Mischung von einem C₁-C₄-Alkylmethacrylat wie Methylmethacrylat mit einem Phenyl-C₁-C₄-alkyl(meth)acrylat oder Phenoxy-C₁-C₄-alkyl(meth)acrylat, z.b. mit 2-Phenoxyethylmethacrylat.

In einer weiteren besonders bevorzugten Ausführungsform 3a enthält das Polymer P1*, bezogen auf die Gesamtmenge der Monomere M1*,
20 bis 80 Gew.-%, insbesondere 25 bis 60 Gew.-% Carboxylgruppen tragende Monomere M1*a, und 20 bis 80 Gew.-%, insbesondere 40 bis 75 Gew.-% Monomere M1*b einpolymerisiert.

In der Ausführungsform 3a sind bevorzugte Monomere M1*a monoethylenisch ungesättigte Mono- und Dicarbonsäuren speziell Acrylsäure, Methacrylsäure, Itaconsäure, Maleinsäure und Fumarsäure.

In der Ausführungsform 3a sind bevorzugte Monomere M1*b Monomere der allgemeinen Formel II, C₂-C₁₀-Olefine und Vinylaromaten insbesondere Styrol, C₁-C₈-Alkylmethacrylate wie Methylmethacrylat, n-Butylmethacrylat, tert.-Butylmethacrylat, n-Hexylmethacrylat und 2-Ethylhexylmethacrylat.

Die die Polymere P1* tragen reaktive funktionelle Gruppen R1, die mit den Isocyanatgruppen unter Bindungsbildung reagieren. Die mittlere Anzahl derartiger Gruppen pro Polymermolekül (Funktionalität) beträgt in der Regel nicht mehr als zwei 3, häufig nicht mehr als 2 und liegt beispielsweise im Bereich von 0,3 bis 3, häufig im Bereich von 0,5 bis 2, oder vorzugsweise im Bereich von 0,3 bis 1,8, insbesondere im Bereich von 0,5 bis 1,5 und speziell im Bereich von 0,6 bis 1,4. Die funktionelle Gruppe R1 kann in der Polymerkette angeordnet sein und befindet sich vorzugsweise am Ende der Polymerkette.

Das hydrophobe Polymer P1* weist vorzugsweise ein zahlenmittleres Molekulargewicht bestimmt mittels GPC nach üblichen Methoden im Bereich von 500 bis 20000 Dalton und insbesondere im Bereich von 1500 bis 15000 Dalton auf.

Bei den Polymeren P2* handelt es sich um lineare oder verzweigte Poly-C₂-C₄-alkylenether, also um Polymere, die im wesentlichen, d.h. zu wenigstens 90 Gew.-%, bezogen auf das Gewicht der Polymere P2* aus Wiederholungseinheiten der Formel IV

⁅A-O⁆- (IV)

aufgebaut sind, worin A für eine C₂-C₄-Alkylengruppe wie Ethan-1,2-diyl, Propan-1,2-diyl, Propan-1,3-diyl, Butan-1,2-diyl oder Butan-1,3-diyl steht. Unter den Polymeren P2* sind solche bevorzugt, die zu wenigstens 50 Gew.-%, vorteilhafterweise wenigstens 70 Gew.-%, insbesondere wenigstens 80 Gew.-% und speziell zu wenigstens 90 Gew.-% aus Ethylenoxid-Einheit, d.h. aus Gruppen der Formel IV aufgebaut sind, worin A für 1 ,2-Ethandiyl steht. Daneben können die aliphatischen Polyether Struktureinheiten aufweisen, die sich von C₃-C₄-Alkylenoxiden ableiten.

Unter den Polymeren P2* sind insbesondere solche bevorzugt, die bezüglich der funktionellen Gruppen R2 eine Funktionalität F2 im Bereich von 0,5 bis 3 und insbesondere im Bereich von 0,6 bis 2,5 aufweisen.

Das zahlenmittlere Molekulargewicht der Polymere P2*, bestimmt mittels GPC nach üblichen Methoden, liegt vorzugsweise im Bereich von 500 bis 20000 Dalton und insbesondere im Bereich von 800 bis 15000 Dalton.

Besonders bevorzugte Polyether P2* sind solche der allgemeinen Formel V

R^{a}-X-(CHR^{b}-CH₂-O)ₚ-H (V)

worin
- R^{a}: für Wasserstoff, C₁-C₂₀-Alkyl oder Benzyl steht,
- X: Sauerstoff oder N H bedeutet,
- R^{b}: Wasserstoff oder Methyl bedeutet, wobei wenigstens 50 mol%, insbesondere wenigstens 70 mol-% und vorzugsweise wenigstens 90 mol% der Gruppen R^{b} für Wasserstoff stehen,
- p: eine ganze Zahl bedeutet, deren Mittelwert im Bereich von 10 bis 500, vorzugsweise 20 bis 250 und insbesondere 25 bis 100 liegt (Zahlenmittel).

Geeignete Polyether P2* sind dem Fachmann bekannt und größtenteils kommerziell erhältlich, beispielsweise unter den Handelsbezeichnungen Pluriol® und Pluronic® (Polyether der BASF-Aktiengesellschaft).

Der Gesamtanteil der Polymere P1* an der oben genannten Polymerzusammensetzung, d. h. die Gesamtmenge aus umgesetztem und nicht umgesetztem Polymer P1*, beträgt vorzugsweise 9 bis 90 und insbesondere 20 bis 68 Gew.-% des Gesamtgewichts von Polymer P1*, Polyether P2* und Verbindung V.

Der Gesamtanteil der Polyether P2* an der Polymerzusammensetzung, d. h. die Gesamtmenge aus umgesetztem und nicht umgesetztem Polyether P2*, beträgt vorzugsweise 9 bis 90 und insbesondere 30 bis 78 Gew.-% des Gesamtgewichts von Polymer P1*, Polyether P2* und Verbindung V.

Der Gesamtanteil der Verbindung V an der Polymerzusammensetzung, d. h. die Gesamtmenge eingesetzten Verbindung V, beträgt vorzugsweise 1 bis 20 und insbesondere 2 bis 15 Gew.-% des Gesamtgewichts von Polymer P1*, Polyether P2* und Verbindung V.

Das Gewichtsverhältnis von Polymer P1* zu Polyether P2* in der amphiphilen Polymerzusammensetzung, jeweils gerechnet als die Gesamtmenge der zur Herstellung eingesetzten Polymere, liegt vorzugsweise im Bereich von 1:10 bis 10:1 und insbesondere im Bereich von 1:4 bis 2,2:1.

Die Verbindungen V sind bereits oben definiert. Es gelten hier auch die oben genannten Bevorzugungen.

Die vorstehend genannten Polymerzusammensetzungen sowie Verfahren zur Herstellung der vorstehend genannten Polymerzusammensetzungen sind in der WO06/084680 beschrieben.

Die vorstehend genannten Polymerzusammensetzungen werden im folgenden als "Polymere A" bezeichnet.

Des weiteren sind statistisch radikalische Copolymere als matrixaufbauende Hilfsstoffe geeignet, wie sie in der WO05/046328 beschrieben sind, enthaltend als Monomere mindestens eine olefinisch ungesättigte Sulfonsäure der Formel I** 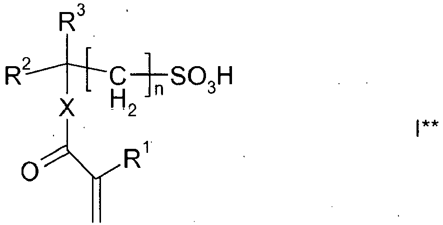 wobei X Sauerstoff oder NR⁵, R¹ Wasserstoff oder Methyl bedeuten, n einen Wert von 0 bis 10 annehmen kann und R² und R³ unabhängig voneinander C₁- bis C₆-Alkyl, R⁵ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylarylaminoaryl, wobei die Arylreste substituiert sein können, bedeuten und die olefinische ungesättigte Sulfonsäure in Säure- oder Salzform oder als Mischung von Säure- und Salzform vorliegen kann, mindestens ein olefinisch ungesättigtes Monomer der Formel II** 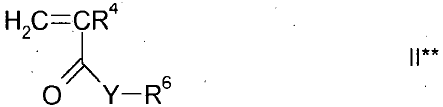 wobei Y Sauerstoff oder NR⁵, R⁴ Wasserstoff oder Methyl, R⁵ und R⁶ unabhängig voneinander Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylarylaminoaryl bedeuten, sowie
optional weitere Monomere.

Salze der Sulfonsäure der Formel I** sind bevorzugt Alkali- oder Ammoniumsalze.

Als Alkylreste allein oder in den genannten Kombinationen kommen C₁ bis C₂₀-Alkyl in Betracht. Insbesondere seien genannt C₁- bis C₆-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1 ,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl und 1-Ethyl-2-Methylpropyl, Cyclohexyl, n-Heptyl, n-Octyl, 2-Ethylhexyl, Decyl, Isodecyl, Undecyl, Lauryl, Tridecyl, Myristyl, Pentadecyl-, Cetyl, Heptadecyl, Stearyl.

Unter Arylresten werden ein oder mehrkernige, gegebenenfalls substituierte aromatische Kohlenwasserstoffreste verstanden. Beispielsweise seien Phenyl, Naphthyl oder durch Halogen wie Fluor oder Chlor substituiertes Phenyl genannt.

Alkoxy steht für einen Alkylrest, der über ein Sauerstoffatom (-O-) an das Gerüst gebunden ist.
Aryloxy steht für einen Arylrest, der über ein Sauerstoffatom (-O-) an das Gerüst gebunden ist.

Als weitere Monomere können beispielsweise vinylaromatische Monomere wie Styrol und Styrolderivate wie α-Methylstyrol, Vinyltoluol, ortho-, meta- und para-Methylstyrol, Ethylvinylbenzol, Vinylnaphthalin, Vinylxylol sowie die entsprechenden halogenierten vinylaromatischen Monomere, nitro-, alkoxy-, haloalkyl-, carbalkoxy-, carboxy-, amino-und alkylaminogruppen tragende vinylaromatischen Monomere, α-Olefine wie Ethen, Propen, 1-Buten, 1-Penten, 1-Hexen, Isobuten, langkettige (C₁₀ - C₂₀) Alkyl-α-Olefine, Diene wie Butadien und Isopren, Vinylalkoholester wie Vinylacetat, Vinylhalogenide wie Vinylchlorid, Vinylbromid, Vinylfluorid, Vinylidenchlorid, Vinylidenfluorid, Vinylidenbromid, Vinylnitril, Vinylcarboxylate, 1-Vinylamide wie 1-Vinylpyrrolidon, 1-Vinylpiperidon, 1-Vinylcaprolactam, 1-Vinylformamid, 1-Vinylacetamid oder 1-Methyl-1-vinylacetamid, N-Vinylimidazol, C₁- bis C₂₄-Alkylester und ein- und zweifach substituierte und unsubstituierte C₁- bis C₂₄-Alkylamide von monoethylenisch ungesättigten Monomeren wie Acryl-, Methacryl-, Fumar-, Malein-, und Itaconsäuren, Vinylsulfonsäure, Anhydride wie Maleinsäureanhydrid, ungesättigte Aldehyde wie Acrolein, ungesättigte Ether wie 1,4-Cyclohexandimethanoldivinylether, 1,4-Cyclohexandimethanolmonovinylether, Butandioldivinylether, Butandiolmonovinylether, Cyclohexylvinylether, Diethylenglykoldivinylether, Ethylenglykolmonovinylether, Ethylvinylether, Methylvinylether, n-Butylvinylether, Octadecylvinylether, Triethylenglykolvinylmethylether, Vinylisobutylether, Vinyl-(2-ethylhexyl)ether, Vinylpropylether, Vinylisoprbpylether, Vinyldodecylether, Vinyl-tert-butylether, Xexadioldivinylether, Hexadiolmonovinylether, Diethyleneglykolmonovinylether, Diethylaminoethylvinylether, Polytetrahydrofuran-290-divinylether, Tetraethyleneglykoldivinylether, Ethylenglykolbutylvinylether, Ethyleneglykoldivinylether, Triethylenglykoldivinylether, Trimethylolpropantrivinylether, Aminopropylvinylether enthalten sein.

Unter einem mit "radikalisch" bezeichneten Polymer wird ein durch radikalische Polymerisation hergestelltes Polymer verstanden.
Unter einem mit "statistisch" bezeichneten Copolymer wird ein Copolymer verstanden bei dem die Monomersequenz durch die Copolymerisationsparameter der Monomere bestimmt wird. Entsprechendes gilt auch für Copolymere bestehend aus mehr als zwei Monomerarten.
Diese Art von Polymeren wird auch als random-Copolymere bezeichnet.

Die Sulfonsäuren der Formel I** können in Säure- oder Salzform oder als Mischung von Säure- und Salzform vorliegen. Stellvertretend für alle diese Formen wird der Begriff "Sulfonsäure" verwendet.
Salze der Sulfonsäure sind Metallsalze, insbesondere Alkalimetallsalze wie Lithium-, Natrium- oder Kaliumsalze oder Ammoniumsalze.

In einer bevorzugten Ausführungsform enthält das statistische radikalische Copolymer als Monomere mindestens eine olefinisch ungesättigte Sulfonsäure der Formel I**, mindestens ein (Meth)acrylat der Formel II**a 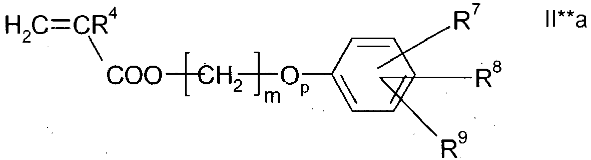 wobei m die ganzzahligen Werte von 0 bis 4 und p die ganzzahligen Werte 0 oder 1 annehmen, R⁴ Wasserstoff oder Methyl und R⁷, R⁸ und R⁹ unabhängig voneinander Wasserstoff, C₁ bis C₆-Alkyl, Halogen, Hydroxy, C₁ bis C₆-Alkoxy, wobei Alkyl und Alkoxy halogensubstituiert sein können, bedeuten, sowie optional weitere olefinische Monomere der Formel II**b 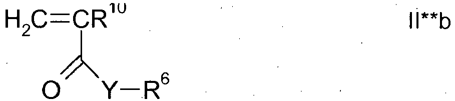 wobei Y = 0 oder NR⁵, R¹⁰ Wasserstoff oder Methyl, R⁵, R⁶ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylarylaminoaryl, wobei die Arylreste substituiert sein können, bedeuten.
Dabei steht Alkoxy für einen Alkylrest wie vorstehend genannt, der über ein Sauerstoffatom an das Gerüst gebunden ist. Aryloxy steht für einen Arylrest, der über ein Sauerstoffatom (-O-) an das Gerüst gebunden ist.
Unter Arylresten werden ein oder mehrkernige, gegebenenfalls substituierte aromatische Kohlenwasserstoffreste verstanden. Beispielsweise seien Phenyl, Naphthyl oder durch Halogen wie Fluor oder Chlor substituiertes Phenyl genannt. Aryloxy steht für einen Arylrest wie vorstehend genannt, der über ein Sauerstoffatom an das Gerüst gebunden ist.
Beispielsweise stehen Alkylaryl für Tolyl, Arylalkyl für Benzyl, Alkoxyalkyl für Ethoxyethyl, Aryloxyalkyl für Phenoxyethyl, Alkoxyaryl für Methoxyphenyl, Hydroxyalkyl für Hydroxyethyl, (Di)Alkylaminoalkyl für Dimethylaminopropyl.

In einer besonders bevorzugten Ausführungsform ist das statistische radikalische Co-polymer aus mindestens einer olefinisch ungesättigten Sulfonsäure der Formel I** und Phenoxy-C₁-C₆-alkylacrylat wie beispielsweise Phenoxyethylacrylat aufgebaut.

In einer weiteren bevorzugten Ausführungsform ist das statistische radikalische Copolymer aufgebaut aus Monomeren der obenstehenden Formel I**, insbesondere 2-Acrylamido-2-Methyl-1-propansulfonsäure und mindestens einem olefinisch ungesättigten Monomer der Formel II**c 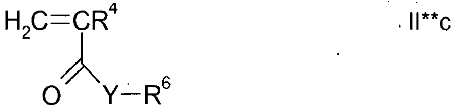 wobei Y für Sauerstoff oder NR⁵, R⁴ Wasserstoff oder Methyl, R⁵, R⁶ Wasserstoff, Alkyl, Aryl, Alkylaryl, Arylalkyl, Alkoxyalkyl, Aryloxyalkyl, Alkoxyaryl; Hydroxyalkyl, (Di)Alkylaminoalkyl, (Di)Alkylaminoaryl, (Di)Arylaminoalkyl, Alkylarylaminoalkyl, Alkylarylaminoaryl, wobei Alkyl und Aryl, die vorgenannten Bedeutungen haben, stehen sowie optional weiteren Monomeren.

In einer weiteren besonders bevorzugten Ausführungsform enthält das statistische radikalische Copolymer als Monomere 2-Acrylamido-2-Methyl-1-propansulfonsäure und mindestens ein olefinisch ungesättigtes Monomer der Formel II, wobei Y Sauerstoff, R⁴ Wasserstoff und R⁶ Wasserstoff oder Alkyl bedeuten.
Demnach enthält das statistische radikalische Copolymer in dieser besonders bevorzugten Ausführungsform als Monomere 2-Acrylamido-2-Methyl-1-propansulfonsäure und mindestens einen Ester der Acrylsäure.
Solche Ester der Acrylsäure sind beispielsweise Methylacrylat, Ethylacrylat, Propylacrylat, Isopropylacrylat, Butylacrylat, 2-Methylpropylacrylat, tert-Butylacrylat, Hexylacrylat, Cyc,lohexylacrylat, n-Octylacrylat, 2-Ethylhexylacrylat, Decylacrylat, Isodecylacrylat, Undecylacrylat, Laurylacrylat, Tridecylacrylat, Myristylacrylat, Pentadecyl-acrylat, Cetylacrylat, Heptadecylacrylat, Stearylacrylat.

In einer ganz besonders bevorzugten Ausführungsform enthält das statistische radikalische Copolymer als Monomere 2-Acrylamido-2-Methyl-1-propansalfonsäure, Phenoxyethylacrylat und mindestens einen Ester der Acrylsäure.

In einer weiteren ganz besonders bevorzugten Ausführungsform ist das statistische radikalische Copolymer aus den Monomeren 2-Acrylamido-2-Methyl-1-propansulfonsäure und Phenoxyethylacrylat aufgebaut.

Verfahren zur Herstellung der vorstehend genannten Copolymere sind in der WO05/046328 beschrieben.

Die vorstehend genannten Copolymere werden im folgenden als "Polymere B" bezeichnet.

Weiterhin als matrixaufbauende Hilfsstoffe sind Coolymere geeignet, wie sie in der WO 06/000592 beschrieben sind, welche erhältlich sind durch Copolymerisation von
(A) optional mindestens einer ethylenisch ungesättigten Mono- oder Dicarbonsäure oder mindestens eines von einer Mono- oder Dicarbonsäure abgeleiteten Anhydrids,
(B) mindestens eines hydrophoben Monomers, welches aromatische Funktionen oder aliphatische Funktionen oder aromatische und aliphatische Funktionen aufweist,
(C) mindestens eines Allylalkoholalkoxylates,
(D) gegebenenfalls weiteren monoethylenisch ungesättigten Monomeren.

Beispiele für ethylenisch ungesättigte Mono- oder Dicarbonsäuren mit 3 bis 8 C-Atomen sind (Meth)acrylsäure, Maleinsäure, Fumarsäure, Crotonsäure; ganz besonders bevorzugt ist Acrylsäure.

Als von einer Mono- oder Dicarbonsäure mit 3 bis 8 C-Atomen abgeleitete Anhydride seien beispielsweise genannt: Maleinsäureanhydrid, Itaconsäureanhydrid, Citraconsäureanhydrid, Methylenmalonsäureanydrid, bevorzugt Itaconsäureanhydrid und Maleinsäureanhydrid und ganz besonders bevorzugt Maleinsäureanhydrid.

Es kommen auch gemischte Anhydride in Frage, beispielsweise das gemischte Anhydrid aus (Meth)acrylsäure und Essigsäure.

Bevorzugte Polymerisate sind durch Copolymerisation folgender Monomere erhältlich:
(A) optional mindestens eine ethylenisch ungesättigten Mono- oder Dicarbonsäure mit 3 bis 8 C-Atomen und/oder mindestens ein von einer Mono- oder Dicarbonsäure mit 3 bis 8 C-Atomen abgeleitetes Anhydrid.
(B) mindestens eine vinylaromatische Verbindung, beispielsweise der allgemeinen Formel VIII

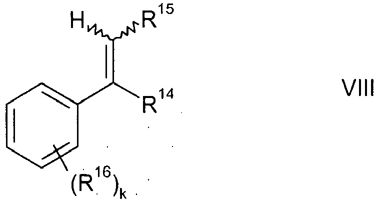

in der R¹⁴ und R¹⁵ unabhängig voneinander jeweils für Wasserstoff, Methyl oder Ethyl stehen, R¹⁶ Methyl oder Ethyl bedeutet und k eine ganze Zahl von 0 bis 2 bedeutet; bevorzugt sind R¹⁴ und R¹⁵ jeweils Wasserstoff, und bevorzugt gilt k = 0.

Bevorzugt wird als (B) alpha-Methylstyrol und ganz besonders bevorzugt Styrol eingesetzt.

### (C) mindestens ein alkoxylierter ungesättigter Ether der allgemeinen Formel I*

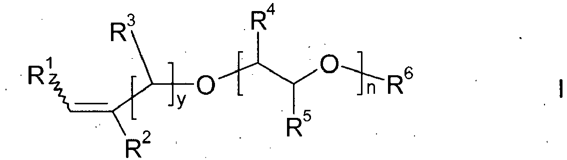

wobei in Formel I* die Variablen wie folgt definiert sind:
R¹, R², R³ gleich oder verschieden und gewählt aus Wasserstoff, C₁-C₄-Alkyl wie Methyl, Ethyl, n-Propyl, iso-Propyl, n-Butyl, iso-Butyl, sec.-Butyl und tert.-Butyl, besonders bevorzugt Methyl, oder Wasserstoff;
R⁴, R⁵ jeweils gleich oder verschieden und gewählt aus Wasserstoff, C1-C4-Alkyl wie Methyl, Ethyl, n-Propyl, iso-Propyl, n-Butyl, iso-Butyl, sec.-Butyl und tert.-Butyl, besonders bevorzugt Methyl, oder Wasserstoff;
R⁶ gewählt aus Wasserstoff, SO₃M, PO₃M₂ und vorzugsweise organische Reste wie C₁-C₃₀-Alkyl, bevorzugt linear oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Hexadecyl, n-Octadecyl, n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl; CO-H (Formyl) oder CO-C1-C20-Alkyl, besonders bevorzugt Acetyl, Propionyl, n-Butyryl, n-Stearyl, n-Lauryl; CO-C6-C14-Aryl wie beispielsweise alpha-Naphthoyl, beta-Naphthoyl und bevorzugt Benzoyl CO-C₆H₅,
M Alkalimetall, insbesondere Natrium oder Kalium, oder NH4+, oder CH₃,
n eine ganze Zahl von 3 bis 100, bevorzugt von 10 bis 40,
y eine ganze Zahl von 0 bis 10, bevorzugt 1 bis 10 und besonders bevorzugt 1 oder 2.

Besonders bevorzugt ist R⁴ und R⁵ jeweils Wasserstoff.

Besonders bevorzugt ist R¹ und R³ Wasserstoff, R² ist gewählt aus Wasserstoff oder Methyl, und y ist 1.

Es können optional ein oder mehrere weitere monoethylenisch ungesättigte Monomere (D) einpolymerisiert werden.

Das oder die Monomere (D), das bzw. die optional in die Polymerisate einpolymerisiert werden können, sind von (A) verschieden. Als bevorzugte Monomere (D) sind zu nennen:

### Ethylenisch ungesättigte C₃-C₈-Carbonsäurederivate der allgemeinen Formel II

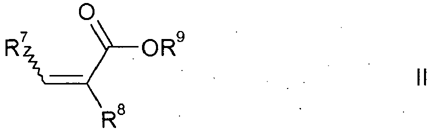

### Acrylamide der Formel III*,

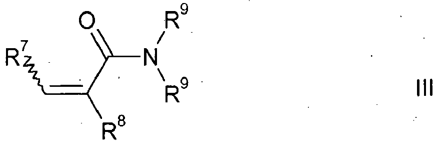

nicht-cyclische Amide der allgemeinen Formel IV a und cyclische Amide der allgemeinen Formel IV b 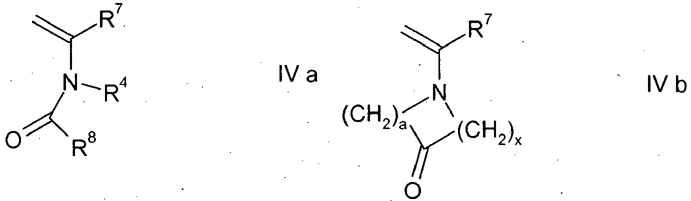 C₁-C₂₀-Alkylvinylether wie Methylvinylether, Ethylvinylether, n-Propylvinylether, Isopropylvinylether, n-Butylvinylether, Isobutylvinylether, 2-Ethylhexylvinylether oder n-Octadecylvinylether;
N-Vinyl-Derivate von stickstoffhaltigen aromatischen Verbindungen, bevorzugt N-Vinylimidazol, 2-Methyl-1-vinylimidazol, N-Vinyloxazolidon, N-Vinyltriazol, 2-Vinylpyridin, 4-Vinylpyridin, 4-Vinylpyridin-N-oxid, N-Vinylimidazolin, N-Vinyl-2-methylimidazolin,
alkoxylierte ungesättigte Ether der allgemeinen Formel V,

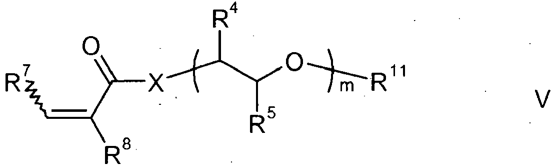

### Ester und Amide der allgemeinen Formel VI,

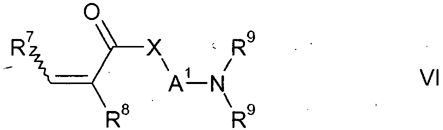

ungesättigte Ester der allgemeinen Formel VII

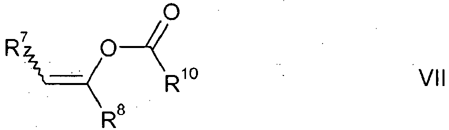

Weiterhin geeignet sind Sulfonat-, Phosphat- oder Phosphonat-Gruppen-haltige Monomere, wie beispielsweise Vinylsulfonsäure und Vinylphosphonsäure und Verbindungen der allgemeirien Formel IX 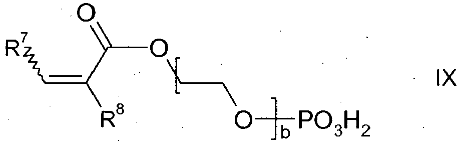 wobei Phosphat-Gruppen, Sulfonat-Gruppen oder Phosphonatgruppen gegebenenfalls partiell oder vollständig in Form von Alkalimetallsalzen vorliegen können.
wobei die Variablen wie folgt definiert sind:
- R⁷,: gewählt aus unverzweigten oder verzweigten C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, und insbesondere Wasserstoff;
- R⁸: gewählt aus unverzweigten oder verzweigten C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl und insbesondere Wasserstoff;
- R⁹: gleich oder verschieden und C₁-C₂₂-Alkyl, verzweigt oder unverzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl oder Wasserstoff; mit der Maßgabe, daß in der Formel II R9 nicht für Wasserstoff steht;
- A1: gleich oder verschieden und C₂-C₆-Alkylen, beispielsweise -CH₂-, -CH(CH₃)-, - (CH₂)₂-, -CH₂-CH(CH₃)-, -(CH₂)₃-, -CH₂-CH(C₂H₅)-, -(CH₂)₄-, -(CH₂)₅-, -(CH₂)₆-, vorzugsweise C₁-C₃-Alkylen; insbesondere -(CH₂)₂-, - CH₂-CH(CH₃)- und -CH₂-CH(C₂H₅)-;
- x: eine ganze Zahl im Bereich von 2 bis 6, vorzugsweise 3 bis 5;
- a: eine ganze Zahl im Bereich von 0 bis 6, vorzugsweise im Bereich von 0 bis 2;
- b: eine ganze Zahl im Bereich von 1 bis 40, bevorzugt 1 bis 10,
- m: eine ganze Zahl im Bereich von 2 bis 200, bevorzugt 10 bis 40;
- R¹⁰, R¹¹: gleich oder verschieden und gewählt aus Wasserstoff, unverzweigten oder verzweigten C₁-C₁₀-Alkyl und wobei unverzweigtes und verzweigtes C₁-C₁₀-Alkyl wie oben stehend definiert ist;
- X: Sauerstoff oder N-R12;
- R¹²: gewählt aus unverzweigten oder verzweigten C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl, n-Heptyl, n-Octyl, n-Nonyl, n-Decyl,-Hexyl; und insbesondere Wasserstoff oder Methyl; Phenyl.

Die übrigen Variablen sind wie oben stehend definiert.

Beispielhaft ausgewählte Verbindungen der Formel III* sind (Meth)Acrylamide wie Acrylamid, N-Methylacrylamid, N,N-Dimethylacrylamid, N-Ethylacrylamid, N-Propylacrylamid, N-tert.-Butylacrylamid, N-tert.-Octylacrylamid, N-Undecylacrylamid oder die entsprechenden Methacrylamide.

Beispielhaft ausgewählte Verbindungen der Formel IV a sind N-Vinylcarbonsäureamide wie N-Vinylformamid, N-Vinyl-N-methylfomamid, N-Vinylacetamid oder N-Vinyl-N-methylacetamid; beispielhaft ausgewählte Vertreter für Verbindungen der Formel IV b sind N-Vinylpyrrolidon, N-Vinyl-4-piperidon und N-Vinyl-epsilon-caprolactam. Beispielhaft ausgewählte Verbindungen der Formel VI sind (Meth)acrylsäureester und - amide wie N,N-Dialkylaminoalkyl(meth)acrylate oder N,N-Dialkylaminoalkyl(meth)-acrylamide; Beispiele sind N,N-Dimethylaminoethylacrylat, N,N-Dimethylaminoethylmethacrylat, N,N-Diethylaminoethylacrylat, N,N-Diethylaminoethylmethacrylat, N,N-Dimethylaminopropylacrylat, N,N-Dimethylaminopropylmethacrylat, N,N-Diethylaminopropylacrylat, N,N-Diethylaminopropylmethacrylat, 2-(N,N-Dimethylamino)ethylacrylamid, 2-(N,N-Dimethylamino)ethylmethacrylamid, 2-(N,N-Diethylamino)ethylacrylamid, 2-(N,N-Diethylamino)ethylmethacrylamid, 3-(N,N-Dimethylamino)propylacrylamid und 3-(N,N-Dimethylamino)propylmethacrylamid.

Beispielhaft ausgewählte Verbindungen der Formel VII sind Vinylacetat, Vinylpropionat, Vinylbutyrat, Vinyl-2-ethylhexanoat oder Vinyllaurat.

Bevorzugt werden als Monomere (D) Acrylester eingesetzt.

Ganz besonders bevorzugt wird als Monomer (D) eingesetzt: Methylacrylat, Methylmethacrylat, Acrylamid, Vinyl-n-butylether, Vinyl-iso-butylether, N-Vinylformamid, N-Vinylpyrrolidon, 1-Vinylimidazol, 4-Vinylpyridin, Vinylphosphonsäure, Vinylsulfonsäure.

Vorzugsweise werden die Monomere (A) bis (D) in folgenden Mengen einpolymerisiert:
(A) 0 bis 50 Gew.-% mindestens einer ethylenisch ungesättigten Mono- oder Dicarbonsäure mit 3 bis 8 C-Atomen oder mindestens eines von einer Mono- oder Dicarbonsäure mit 3 bis 8 C-Atomen abgeleiteten Anhydrids, bevorzugt 5 bis 30 Gew.-%,
(B) 5 bis 80 Gew.-% mindestens eines hydrophoben Monomers, bevorzugt 8 bis 50 Gew.-%,
(C) 10 bis 90 Gew.-% mindestens eines alkoxylierten ungesättigten Ethers der allgemeinen Formel I, bevorzugt 40 bis 75 Gew.-%,
(D) 0 bis 20 Gew.-% mindestens eines weiteren Monomers, bevorzugt 2 bis 10 Gew.-%, ganz besonders bevorzugt 1 bis 5 Gew.-%
wobei die Monomere wie oben stehend definiert sind.

Die vorstehend genannten Copolymerisate werden im folgenden als "Polymere C" bezeichnet.

Verfahren zur Herstellung der vorstehend genannten Polymere C sind in der WO 06/000592 beschrieben.

Es können auch Mischungen der oben genannten matrixaufbauenden Hilfsstoffe eingesetzt werden.

Bevorzugte matrixaufbauende Hilfsstoffe sind die Polymere A, sowie die Polymere B und C, Vinylpyrrolidonpolymere sowie Vinylpyrrolidon-Vinylacetat-Copolymere sowie Mischungen aus den vorstehend genannten Polymeren.

Die Matrixhilfsstoffe (ii) werden vorzugsweise in Mengen von 30 bis 90 Gew.-% eingesetzt.

Zur weiteren Verbesserung der Löslichkeit können zusätzlich Solubilisatoren eingesetzt werden.

Als Solubilisatoren kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal; Sorbitester, Ligninsulfitablaugen und Methylcellulose, Polyoxyethylenfettsäureester, Polyoxyethylenfettolkohole, Polyoxyethylenglycerinfettsäureester, Polyoxyethylenglycerinfettolkohole,Glycerinfettsäureester, Glycerinfettolkohole, Sorbitanfettsäureester in Betracht

Solche Tenside (iii) werden vorzugsweise in Mengen von 0 bis 30 Gew.-%, vorzugsweise 1 bis 30 Gew.-% eingesetzt.

Es kann sich auch empfehlen, als zusätzliche Lösungsvermittler organische Lösungsmittel in Mengen von bis zu 10 Gew.-% einzusetzen. Als organische Lösungsmittel kommen aromatische Lösungsmittel (z.B. Solvesso Produkte, Xylol), Paraffine (z.B. Erdölfraktionen), Alkohole (z.B. Methanol, Butanol, Pentanol, Benzylalkohol, iso-Propanol, Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester, DMSO. Grundsätzlich können auch Lösungsmittelgemische verwendet werden.

Vorzugsweise wird jedoch auf den Einsatz von organischen Lösungsmitteln verzichtet.

Zum Teil haben die Wirkstoffe und Solubilisatoren eine erhebliche weichmachende Wirkung, d. h. sie senken die Glasübergangstemperatur des Polymers deutlich, wodurch die Sprühtrocknung mitunter schwierig wird. In diesen Fällen hat sich die Verwendung eines Trägerstoffes (auch im folgenden als Adsorbens bezeichnet) als sehr vorteilhaft erwiesen. Dieser Trägerstoff saugt die flüssige oder halbfeste Wirkstoff-Polymerlösung auf erzeugt damit eine feste Zubereitung, die gut anwendbar ist. Als Trägersotffe können z. B. folgende Stoffe eingesetzt werden: natürliche Gesteinsmehle (z.B. Kaoline, Tonerden, Talkum, Kreide, Bolus, Löß, Ton, Dolomit, Diatomeenerde) und synthetische Gesteinsmehle (z.B. Kieselsäure, hochdisperse Kieselsäure, hydrophobe Kieselsäure, Silikate wie z.B. Alkali- oder Erdalkalisilikate, Erdalkali-Aluminiumsilikate Calcium- und Magnesiumsulfat, Magnesiumoxid), quervernetztes Polyvinylpyrrolidon, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulose (Cellulosepulver), Cellulosederivate wie Natriumcarboxymethylcellulose, Stärke, Stärkederivate wie quervernetzte Natriumcarboxymethylstärke und andere feste Trägerstoffe.

Das Adsorbens wird in der Regel vor dem Erwärmungsschritt in der Sprühlösung suspendiert und mitgetrocknet. Ein Teil kann aber auch pulverförmig in den Sprühturm eingeblasen werden.

Darüber hinaus können, um spezifische Charakteristika zu erzielen, weitere Hilfsstoffe (iv) wie Bakterizide und/oder Antischäumungsmittel sowie optional Farbstoffe und/oder Kleber für Saatgutbeize Verwendung finden.

Solche Hilfsstoffe sind, wenn sie beigefügt werden, vorzugsweise in Mengen von 0 bis 50 Gew.-%, besonders bevorzugt in Mengen von 0,1 bis 20 Gew.-% enthalten.

Als Antischaummittel kommen alle zur Formulierung von agrochemischen Wirkstoffen üblichen Antischaummittel in Betracht. Beispiele für Antischaummittel sind Silikonemulsionen (wie z.Bsp. Silikon® SRE, Firma Wacker oder Rhodorsil® der Firma Rhodia), langkettige Alkohole, Fettsäuren, fluororganische Verbindungen und deren Gemische in Betracht.

Als Bakterizide kommen alle zur Formulierung von agrochemischen Wirkstoffen üblichen Bakterizide in Betracht wie zum Beispiel Bakterizide basierend auf Diclorophen und Benzylalkoholhemiformal. Beispiele für Bakterizide sind Proxel® der Fa. ICI oder Acticide® RS der Fa. Thor Chemie und Kathon® MK der Firma Rohm & Haas.

Als Farbstoffe kommen alle für derartige Zwecke übliche Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe, sowie pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108

Als Kleber kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Erfindungsgemäß werden zunächst durch Erhitzen wässrige Lösungen, enthaltend das Pestizid und die Matrixhilfsstoffe sowie gegebenenfalls die weiteren Komponenten (iii) bis (iv), hergestellt. Vorzugsweise wird Wasser als alleiniges Lösungsmittel verwendet. Im Allgemeinen beträgt die Konzentration des schwerlöslichen Pestizides in der Hilfsstoffmatrix1 oder mehr Gew.%, bevorzugt größer als 10 Gew.%m besonders bevorzugt größer als 20 Gew.%. In einer der bevorzugten Ausführungsformen beträgt die Konzentration des schwerlöslichen Pestizides in der Hilfsstoffmatrix von 1 bis 50 Gew.-%, bevorzugt von 10 bis 50 Gew.-% und besonders bevorzugt von 20 bis 50 Gew.-%.

### Grundsätzlich gibt es folgende Methoden zur Herstellung der Lösungen:

Methode A: Man stellt eine wässrige Suspension her, die das Pestizid in suspendierter Form und die Matrixhilfsstoffe in gelöster Form enthält sowie gegebenenfalls die weiteren Komponenten. Dazu kann man entweder zunächst die Matrixhilfsstoffe in Wasser lösen und das Pestizid in dieser Lösung suspendieren oder eine wässrige Suspension des Pestizid esmit den Matrixhilfsstoffen versetzen. Die so erhaltene Suspension wird dann in einer geeigneten Vorrichtung bis zur Lösung des Pestizides erhitzt.

Methode B: Man stellt wie unter Methode A beschrieben eine wässrige Suspension des Pestizides, die die Matrixhilfsstoffe in gelöster Form enthält, her und erhitzt diese durch Vermischen mit einem heissen Wasserstrom oder einem Wasserdampfstrom bis zur Lösung des Pestizides.

Methode C: In einer geringfügigen Abwandlung der Methode B kann man auch Matrixhilfsstoffe, sofern sie temperaturstabil sind, in einem heißen Wasserstrom lösen und mit einer Suspension des Pestizides in Wasser vermischen.

### Unabhängig von der gewählten Methode gilt Folgendes:

Für die Dispergierung des Pestizides in Wasser oder der wässrigen Polymerlösung ist eine kleine Korngröße von Vorteil, weil diese erstens die Dispergierung erleichtert und zweitens der Auflöseprozess in der Hitze schneller erfolgt. Falls ein grobes Pestizidgesetzt wird, kann dieser auch in der Polymerlösung zerkleinert oder gemahlen werden, bevor die Suspension erhitzt wird. Für die Zerkleinerung können beispielsweise Hochdruckhomogenisatoren, Rotor-Stator-geräte, Kugelmühlen oder Kolloidmühlen verwendet werden. Prinzipiell kann das Pestizid aber auch wie beschrieben zuerst in Wasser gegeben werden und anschließend erst das Polymer zugesetzt werden.

Das Erhitzen der wässrigen Suspension erfolgt kontinuierlich in einer geeigneten Vorrichtung.

Die Erhitzung kann beispielsweise in jedem geeigneten Wärmeaustauscher erfolgen, wobei man als Wärmeaustauscher allgemein Vorrichtungen bezeichnet, in welchen durch ein Wärmeübertragungsmittel Wärme auf ein anderes Medium transportiert wird, um eine Erhitzung zu erzielen.

Beim mittelbaren Wärmeaustausch sind Wärmeübertragungsmedium und zu erhitzendes Medium durch Wärmeaustauschflächen getrennt. Als Wärmeübertragungsmedium eignen sich heisses Öl, heisser Dampf oder überhitztes Wasser oder auch allgemein heisse Gase oder heiße Flüssigkeiten. Das Wärmeübertragungsmedium kann im Gegenstrom zu der zu erhitzenden wässrigen Suspension geleitet werden. Weiterhin kann auch das zu erhitzende Medium kontinuierlich durch ein statisches Wärmeübertragungsmedium geleitet werden.

Beim unmittelbaren Wärmeaustausch, wie er erfindungsgemäß nach den Methoden B) oder C) erfolgt, berühren sich beide Medien. Als unmittelbare Wärmeaustauschmittel kommen daher überhitztes Wasser oder Wasserdampf als Wärmeübertragungsmittel in Betracht.

Generell kann die Erhitzung der Wirkstoffsuspension mit allen Verfahren erfolgen, die eine sehr schnelle Heizrate ermöglichen. So sind auch elektrische, induktive oder Mikrowellen-Erwärmungen möglich.

Um den Wirkstoff in Wasser in Lösung zu bringen, wird die wässrige Suspension auf Temperaturen erhitzt, die über der Siedetemperatur der Mischung bei Normaldruck liegen, erhitzt. Dabei können Temperaturen von 80°C °C bis 350 °C, vorzugsweise 90°C bis 300 °C, besonders bevorzugt 90°C bis 250 °C, gewählt werden.

Um eine thermische Belastung der Einsatzstoffe zu vermeiden, werden unabhängig davon, welche der geschilderten Methoden angewandt wird, die Verweilzeiten beim Erhitzen auf mindestens 90 °C im Bereich von Sekunden gehalten. Vorzugsweise beträgt die Verweilzeit des wirkstoffhaltigen Mediums in der zum Erhitzen eingesetzten Vorrichtung kleiner 180 Sekunden, besonders bevorzugt kleiner 60 Sekunden, ganz besonders bevorzugt kleiner 15 Sekunden. Um eine vollständige Lösung des Wirkstoffs zu erzielen, wird im allgemeinen eine Mindestverweilzeit von 0,5 Sekunden gewählt.

Üblicherweise beträgt der Feststoffgehalt der Lösungen 1 bis 70 Gew.-%, bevorzugt 3 bis 60 Gew.-%, besonders bevorzugt 5 bis 40 Gew.-%.

Die heiße und unter Druck stehende wässrige Lösung von Pestizid, Matrixhilfsstoffen und gegebenenfalls weiteren Komponenten wird nach Passieren der Vorrichtung direkt in eine Zerstäubungsvorrichtung geleitet. Das Zerstäuben kann über Düsen erfolgen, wobei sich grundsätzlich Ein- oder Mehrstoffdüsen eignen, oder über rotierende Scheiben erfolgen. Die Zerstäubung der Zubereitung im Trocknungsturm erfolgt vorzugsweise über Einstoffdüsen bei Drücken von 10 bis 250 bar. Es können aber auch Mehrstoffdüsen, insbesondere Zweistoffdüsen, eingesetzt werden, wobei der Druck des Zerstäubungsgases 0,15 bis 10 MPa betragen kann.

Die Turmeingangstemperaturen des Trocknungsgases, liegen zwischen 50 und 200°C vorzugsweise zwischen 70 und 180°C. Als Trocknungsgase eignen sich Luft oder inerte Gase wie Stickstoff, Argon oder Helium. Die Turmausgangstemperaturen liegen bei 40 bis 120 °C. Das Trocknungsgas kann im Gleichstrom oder im Gegenstrom zu den Flüssigkeitströpfchen in den Trockenturm eingeleitet werden, vorzugsweise im Gleichstrom.

Neben der einfachen Sprühtrocknung kann auch eine agglomerierende Sprühtrocknung mit internem und/oder externem Wirbelbett (z.B. FSD-Technologie der Firma Niro)durchgeführt werden, wobei die bei der Sprühtrocknung gebildeten Teilchen zu größeren Gebilden agglomeriert werden.

Generell können alle Trocknungstechniken, bei denen eine Lösung zerstäubt wird, eingesetzt werden, so auch die Wirbelschicht-Sprühgranulation.

Sofern die sprühgetrockneten Teilchen eine gewisse Klebetendenz aufweisen, bietet sich die Bepuderung mit einem sehr feinteiligen Feststoff an. Dabei wird dieser feinteilige Feststoff in den Sprühturm eingestäubt und sorgt so dafür dass keine Verklebung oder Verklumpung auftritt. Hierfür geeignete Stoffe zum Bestäuben sind die oben bereits definierten Trägerstoffe.
Gemäß einer Ausführungsform zur erfindungsgemässen Herstellung der festen Lösungen nach Methode A wird das Pestizid demgemäß in einer wässrigen Lösung des Polymers dispergiert und die Suspension in einer geeigneten Vorrichtung auf Temperaturen oberhalb von 90° erhitzt, so dass die Pestizidkristalle in Lösung gehen. Die Erhitzung der wirkstoffhaltigen Polymerlösung sollte möglichst schnell erfolgen, um die Temperaturbelastung des Pestizides gering zu halten. Dazu wird die wirkstoffhaltige Suspension kontinuierlich durch eine geeignete Vorrichtung geleitet, wobei die Verweilzeiten wie geschildert vorzugsweise im Bereich von wenigen Sekunden liegen. Diese erhitzte unter Druck stehende Wirkstofflösung wird im Anschluss daran zerstäubt und getrocknet. Die Temperatur der Sprühlösung kurz vor der Zerstäubung, also vor Einleitung in die Zerstäubungsvorrichtung, beträgt 80 bis 350°C, vorzugsweise 90 bis 300°C und besonders bevorzugt 90 bis 250°C. Der Druck der Sprühlösung beträgt dabei 0,08 bis 20 MPa, vorzugsweise 1 bis 15 MPa..

Gemäß einer bevorzugten Ausführungsform der Erfindung kann die Pestizid-haltige Polymerlösung durch eine dünne Rohrleitung gepumpt werden, die sich in einem heißen Ölbad befindet, das Temperaturen von 90°C bis 500°C, vorzugsweise 110 bis 300°C aufweist. Dadurch ist ein schneller Wärmeübergang möglich. Die Einstellung der Temperatur der wirkstoffhaltigen Polymerlösung erfolgt durch Variation der Ölbadtemperatur und der Durchflussgeschwindigkeit. Direkt im Anschluss an die Durchleitung durch die Rohrleitung wird die heisse unter Druck stehende Lösung über eine Sprühdüse zerstäubt und mit warmem Trocknungsgas getrocknet. Durch die Verdampfung des Wassers erfolgt eine schlagartige Abkühlung und Trocknung der Sprühtröpfchen.

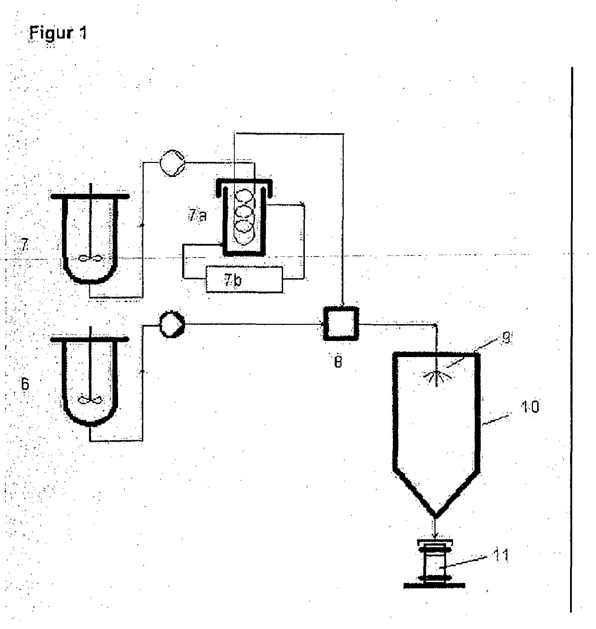

Eine solche Verfahrensweise ist beispielsweise in Abbildung 1 schematisch dargestellt. Dabei wird in einem mit einem Rührer ausgestatteten Behälter 1 die Suspension des Wirkstoffs in der wässrigen Lösung der Matrikhilfsstoffe hergestellt, die Suspension anschliessend kontinuierlich in einer Rohrschlange durch einen Wärmetauscher 2 gepumpt, der mit einer Heizung 2a zur Erhitzen des Wärmeübertragungsmediums ausgestattet ist, und die Lösung anschliessend über eine Düse 3 in einem Sprühturm 4 zerstäubt und getrocknet, und die entstehende teilchenförmige feste Lösung 5 aufgefangen.

Gemäss einer weiteren Ausführungsform der Erfindung kann die im Folgenden geschilderte Vorgehensweise nach Methode B gewählt werden. Diese Vorgehensweise empfiehlt sich besonders, wenn die Temperaturbelastung des schwerlöslichen Pestizides weiter minimiert werden soll. Die Suspendierung des schwerlöslichen Pestizides in der Polymerlösung erfolgt bei Raumtemperatur oder leicht erhöhter Temperatur, bei der sich das Pestizid noch nicht zersetzt. Diese Suspension wird einer Mischzelle zugeführt, in der sie mit überhitztem Wasser oder Wasserdampf turbulent gemischt wird. Die Temperatur des Wassers oder Dampfes sollte zwischen 90 bis 500°C, vorzugsweise 110 bis 400°C, besonders bevorzugt 110°C bis 300°C betragen. Durch die hohe Temperatur des Wassers oder Dampfes und die turbulente Mischung wird die Suspension des Wirkstoffes in der Polymerlösung in kürzester Zeit auf Temperaturen oberhalb von 90°C erhitzt und der Wirkstoff geht in Lösung. Direkt im Anschluß an die Passage der Mischzelle erfolgen die Zerstäubung in einer Sprühdüse und die Sprühtrocknung. Die Temperatur der zu versprühenden Lösung wird geregelt durch die Temperaturen der beiden Flüssigkeitsströme und das Mischungsverhältnis derselben. Höhere Temperaturen des Wasser- oder Dampfstromes und eine größeres Verhältnis Wasser- oder Dampfstrom zu Pestizid -Polymersuspension erhöhen die Temperatur der zu versprühenden Pestizid lösung. Die Verweilzeit in der Mischzelle hängt von der Strömungsgeschwindigkeit der beiden Flüssigkeitsströme sowie der Geometrie der Mischzelle ab. In der Regel wird die Suspension des Pestizides in der Polymerlösung innerhalb von Sekundenbruchteilen auf die gewünschte Temperatur gebracht. Die Temperaturbelastung des Pestizides ist ferner davon abhängig wie schnell im Anschluss an die Mischung die Sprühtrocknung erfolgt. Die Strecke zwischen Mischzelle und Sprühdüse sollte daher entsprechend klein sein. Zur Auflösung der Pestizid kristalle ist eine Mindestverweilzeit erforderlich, die aus der wirkstoffspezifischen Auflösungsgeschwindigkeit, der Temperatur der Lösung bzw. Suspension und der Teilchengröße resultiert. Die Gesamtverweilzeit des Pestizides bei hohen Temperaturen kann eingestellt werden durch die Strömungsgeschwindigkeit, die Geometrie der Mischzelle und der Länge der Strecke bis zur Sprühdüse. In der Regel beträgt die Gesamtverweilzeit kleiner 30 Sekunden, vorzugsweise kleiner 15 Sekunden und besonders bevorzugt kleiner 5 Sekunden.
Bei hoher Auflösungsgeschwindigkeit des Pestizides können auch Zeiten kleiner 1 Sekunde erzielt werden.
Die Volumenströme können im Verhältnis von 9 : 1 bis 1 : 9 variiert werden, zum Beispiel kann das Verhältnis der Volumenströme von Suspension des Pestizides zum heißen Flüssigkeitsstrom zwischen 9 : 1 und 1 : 9 liegen, bevorzugt zwischen 7 : 3 und 3 : 7.

Die Geometrie der Mischzelle kann sehr vielfältig gestaltet sein. Von einem einfachen T-Stück bis zu sehr ausgefeilten, hochturbulent mischenden Zellen. Der Winkel mit dem die Ströme zusammengeführt werden, kann zwischen 5 und 180° betragen. In einer besonderen Ausführung kann ein Strom mittels einer Injektordüse in den anderen Strom injiziert werden.

Weitere Hilfsstoffe wie zum Beispiel Solubilisatoren werden in der Regel in den wirkstoffhaltigen Strom eingebracht, jedoch können sie prinzipiell auch über die heiße Wasserphase eingeschleust werden.

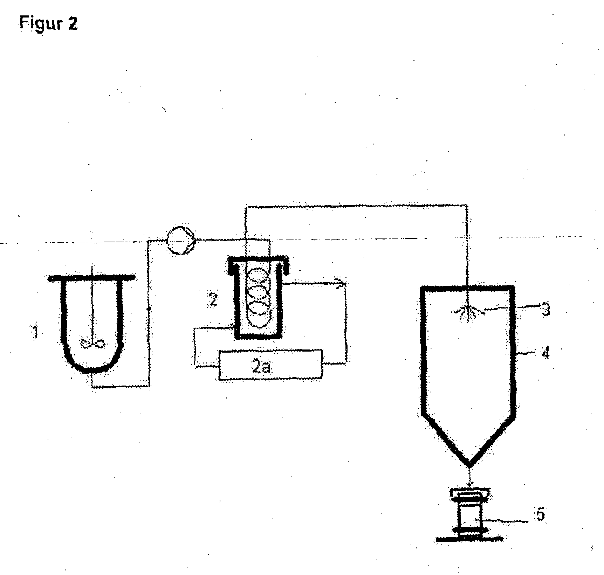

Eine solche Vorgehensweise ist in Abbildung 2 schematisch dargestellt. Dabei wird in einem mit einem Rührer ausgestatteten Behälter 6 eine Pestizid suspension in einer Lösung der Matrixhilfsstoffe hergestellt und kontinuierlich in eine Mischzelle 8 gepumpt. Wasser wird aus einem Behälter 7 kontinuierlich durch einen Wärmetauscher 7a gepumpt, der mit einer Heizung 7b versehen ist, und als überhitztes Wasser oder Dampf ebenfalls in die Mischzelle 8 gepumpt. In der Mischzelle 8 erfolgt durch kontinuierliches Vermischen der beiden Ströme das Erhitzen und die Auflösung des Pestiziedes. Die heiße Lösung wird dann über eine Düse 9 in einem Sprühturm 10 zerstäubt und die teilchenförmige feste Lösung 11 aufgefangen.

Feste Lösungen von schwerlöslichen Pestiziden in Form von Pulvern oder Granulaten sind erhältlich indem eine wässrige Suspension des schwerlöslichen Pestizides in Gegenwart von Matrixhilfsstoffen auf Temperaturen, die oberhalb der Siedetemperatur bei Normaldruck liegen, erhitzt und das schwerlösliche Pestizid in Lösung gebracht wird, und die Lösung des schwerlöslichen Pestizides und der Matrixhilfsstoffe (Sprühlösung) anschließend durch Zerstäuben und Trocknen in eine feste Form überführt wird, wobei die Temperatur der Sprühlösung vor der Zuführung in die Zerstäubungsvorrichtung 80 °C bis 350 °C beträgt. Bevorzugt werden die festen Lösungen erhalten indem eine wässrige Suspension des schwerlöslichen Pestizides in Gegenwart von Matrixhilfsstoffen auf Temperaturen, die oberhalb der Siedetemperatur bei Normaldruck liegen, erhitzt und das schwerlösliche Pestizid in Lösung gebracht wird, und die Lösung des schwerlöslichen Pestizides und der Matrixhilfsstoffe (Sprühlösung) anschließend durch Zerstäuben und Trocknen in eine feste Form überführt wird, wobei die Temperatur der Sprühlösung vor der Zuführung in die Zerstäubungsvorrichtung 80 °C bis 350 °C beträgt.

Bevorzugte Ausführungsformen der Verfahren zur Herstellung von festen Lösungen sind wie vorgehend beschrieben.

Die Pulver oder Granulate enthalten im Allgemeinen,
a) 1 - 50 Gew.-% Pestizid,
b) 10 - 99 Gew.-% eines wasserlöslichen Matrixhilfsstoffs,
c) 0 - 30 Gew.-% Solubilisatoren, und
d) 0 - 50 Gew.-% weitere übliche Hilfsstoffe.

Das nach dem erfindungsgemäßen Verfahren hergestellte Pulver weist aufgrund seiner Porosität sehr gute Eigenschaften für die weitere Verarbeitung auf. Üblicherweisen werden mittlere Korngrößen von 25 bis 500 µm erhalten.

Die festen Lösungen von schwerlöslichen Pestiziden in Form von Pulver oder Granulaten werden zur Herstellung von Pestizid enthaltenen Formulierungen verwendet.

Die hergestellten Pulver können direkt eingesetzt werden (als Stäube oder benetzbare Pulver: WP, SP, SS, WS, DP, DS) oder entsprechend weiterverarbeitet werden (zu Pasten , Pastillen, benetzbaren Pulvern, Stäube (WP, SP, SS, WS, DP, DS) oder Granulate (GR, FG, GG, MG). Bei der Weiterverarbeitung können den wie oben herstellten Pulvern weitere der bereits oben definierten Hilfsmittel beigemengt werden. Die für die Weiterverarbeitung benötigte Technologie ist dem Fachmann bekannt, da sich die erfindungsgemäßen Zubereitungen analog wie Pestizide oder Pestizid beladende Trägerstoffe einsetzten lassen die vgl. US 3,060,084, EP-A 707 445 (für flüssige Konzentrate), Browning, "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 und Mollet, H., Grubemann, A., Formulation technology, Wiley VCH Verlag GmbH, Weinheim (Federal Republic of Germany), 2001).

Der Vorteil der erfindungsgemäßen hergestellten pestiziden Formulierungen liegt darin, dass hohe Konzentrationen an Wirkstoff als feste, molekulardisperse Lösung vorliegen, sodass sich die feste Lösung in wässrigem Milieu schnell auflöst und der Wirkstoff im wässrigen Milieu lange Zeit im übersättigten Bereich gehalten wird. Dadurch wird eine hohe biologische Wirkung erzielt.

Für die Saatgutbehandlung werden die erfindungsgemäß hergestellten Formulierungen mit Wasser verdünnt oder direkt eingesetzt. Der Begriff Saatgutbehandlung umfasst alle gängigen Technicken (seed dressing, seed coating, seed dusting, seed soaking, seed film coating, seed multilayer coating, seed encrusting, seed dripping, und seed pelleting, vorzugsweise seed soaking).

Der Begriff Saatgut umfasst Saatgut aller Arten, wie z.B. Körner, Samen, Früchte, Knollen, Stecklinge und ähnliche Formen. Bevorzugt beschreibt der Begriff Saatgut hier Körner und Samen.

Geeignetes Saatgut sind Getreidesaäten Halmfruchtsaaten, Hackfruchtsaaten, Ölsaaten, Gemüsesaaten, Gewürzsaatgut, Zierpflanzensaatgut, z.B. Saatgut von Hartweizen, Weizen, Gerste, Hafer, Roggen, Mais (Futtermais und Zuckermais), Soja, Ölsaaten, Kreuzblütler, Baumwolle, Sonnenblumen, Bananen, Reis, Raps, Rüben" Zuckerrüben, Futterrüben Eierpflanzen, Kartoffeln, Gras, (Zier-)Rasen, Futtergras, Tomaten, Lauch, Kürbis, Kohl, Eisberg Salat, Pfeffer, Gruken, Melonen, Brassica spp, Melonen, Bohnen, Erbsen, Knoblauch, Zwiebeln, Karotten, Knollengewächse wie Zuckerrohr, Tabbak, Weintrauben, Petunien und Geranien, Stiefmütterchen, Springkraut, bevorzugt Weizen, Mais, Soja und Reis.

Als Saatgut kann auch das Saatgut transgener oder durch herkömmliche Züchtungsmethoden erhaltener Pflanzen eingesetzt werden.

So kann Saatgut eingesetzt werden, das gegenüber Herbiziden, Fungiziden oder Insektiziden tolerant ist, z.B. gegenüber Sulfonylharnstoffen (z.B. EP-A-0257993, U.S. Pat. No. 5,013,659), Imidazolinonen (z.B. US 6222100, WO0182685, WO0026390, WO9741218, WO9802526, WO9802527, WO 04/106529, WO 05/20673, WO 03/14357, WO 03/13225, WO 03/14356, WO 04/16073), Glufosinate-Typ Herbizden (z.B. EP-A-0242236, EP-A-242246) oder Glyphosate- Typ Herbizden (z.B. WO 92/00377) oder Herbiziden aus der Klasser der yclohexadienone/ Aryloxyphenoxypropiosäuren (z.B. US 5,162,602 , US 5,290,696 , US 5,498,544 , US 5,428,001 , US 6,069,298 , US 6,268,550 , US 6,146,867 , US 6,222,099 , US 6,414,222);
oder Saatgut transgener Pflanzen, z.B. Baumwolle, die Bacillus thuringiensis toxin (Bt toxins) produzieren und dadurch gegenüber bestimmten Schadorganismen gegenüber resistent sind (z.B. EP-A-0142924, EP-A-0193259).

Weiterhin kann auch Saatgut von Pflanzen eingesetzt werden, die im Vergleich mit herkömmlichen Pflanzen modifizierte Eigenschaften aufweisen eingesetzt werden. Beispiele hierfür sind geänderte Stärkesynthese (z.B. WO 92/11376, WO 92/14827, z.B. WO 91/19806) oder Fettsäurezusammensetzungen (z.B. WO 91/13972).

Bekämpfung unerwünschten Pflanzenwuchses bedeutet die Bekämpfung/Zerstörung von Pflanzen, welche an Orten wachsen, an welchen sie unerwünscht sind, z.B. von dicotyledonen Pflanzen der Arten: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum;

Monocotyledone Pflanzen der Arten: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera.

Der Begriff unerwünschte Insekten- oder Milben beschreibt, ist aber nicht beschränkt auf folgende Gattungen:
Lepidoptera, zum Beispiel Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula, absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni und Zeiraphera canadensis;
Käfer (Coleoptera) zum Beispiel Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus und Sitophilus granaria;
Diptera, zum Beispiel Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolü, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea und Tipula paludosa;
Thysanoptera zum Beispiel Frankliniella fusca, Frankliniella occidentalis, Frankliniella tritici, Scirtothrips citri, Thrips oryzae, Thrips palmi und Thrips tabaci;
Hymenoptera zum Beispiel Athalia rosae, Atta cephalotes, Atta sexdens, Atta texana, Hoplocampa minuta, Hoplocampa testudinea, Monomorium pharaonis, Solenopsis geminata und Solenopsis invicta;
Heteroptera zum Beispiel Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis und Thyanta perditör;
Homoptera zum Beispiel Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Cäpitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobiön avenae, Trialeurodes vaporariorum, Toxoptera aurantiiund, und Viteus vitifolii;
Termiten (Isoptera), z.B. Calotermes flavicollis, Leucotermes flavipes, Reticulitermes lucifugus und Termes natalensis;
Orthoptera, z.B. Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus und Tachycines asynamorus ;
Arachnoidea, zum Beispiel Acarina, z.B. aus den Familien Argasidae, Ixodidae und Sarcoptidae, z.B. Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, und Eriophyidae spp. z.B. Aculus schlechtendali, Phyllocoptrata oleivora und Eriophyes sheldoni; Tarsonemidae spp. z.B. Phytonemus pallidus und Polyphagotarsonemus latus; Tenuipalpidae spp. z.B. Brevipalpus phoenicis; Tetranychidae spp. z.B. Tetranychus cinnabarinus, Tetranychus kanzawai, Tetranychus pacificus, Tetranychus telarius und Tetranychus urticae, Panonychus ulmi, Panonychus citri, und oligonychus pratensis;
Nematoden, insbesonders Pflanzen parasitäre Nematoden, z.B.plant root knot Nematoden, Meloidogyne hapla, Meloidogyne incognita, Meloidogyne javanica, und andere Meloidogyne Species; cyst-forming Nematoden, Globodera rostochiensis und andere Globodera Species; Heterodera avenae, Heterodera glycines, Heterodera schachtii, Heterodera trifolii, und andere Heterodera Species; Seed gall Nematoden, Anguina Species; Stem und foliar Nematoden, Aphelenchoides Species; Sting Nematoden, Belonolaimus longicaudatus und andere Belonolaimus Species; Pine Nematoden, Bursaphelenchus xylophilus und andere Bursaphelenchus Species; Ring Nematoden, Criconema Species, Criconemella Species, Criconemoides Species, Mesocriconema Species; Stem und bulb NematodeN, Ditylenchus destructor, Ditylenchus dipsaci und andere Ditylenchus Species; Awl Nematodes, Dolichodorus Species; Spiral Nematoden, Heliocotylenchus multicinctus und andere Helicotylenchus Species; Sheath und sheathoid Nematoden, Hemicycliophora Species und Hemicriconemoides Species; Hirshmanniella Species; Lance Nematoden, Hoploaimus Species; false rootknot Nematoden, Nacobbus Species; Needle Nematoden, Longidorus elongatus und andere Longidorus Species; Lesion Nematoden, Pratylenchus neglectus, Pratylenchus penetrans, Pratylenchus curvitatus, Pratylenchus goodeyi und andere Pratylenchus Species; Burrowing Nematoden, Radopholus similis und andere Radopholus Species; Reniform Nematoden, Rotylenchus robustus und andere Rotylenchus Species; Scutellonema Species; Stubby root Nematoden, Trichodorus primitivus und andere Trichodorus Species, Paratrichodorus Species; Stunt Nematoden, Tylenchorhynchus claytoni, Tylenchorhynchus dubius und andere Tylenchorhynchus Species; Citrus Nematoden, Tylenchulus Species; Dagger Nematoden, Xiphinema Species;
sowie Reis Pathogene wie z.B. rice water weevil (Lissorhoptrus oryzaphilus), rice stem borer (Chilo suppresalis), rice leaf roller, rice leaf beetle, rice leaf miner (Agromyca oryzae), leafhoppers (Nephotettix spp.;especially smaller brown leafhopper, green rice leafhopper), planthoppers (Delphacidae; especially white backed planthopper, brown rice planthopper), stinkbugs;

Der Begriff phytopathogene Pilze beschreibt, ist aber nicht beschränkt auf, folgende Spezies:
Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis an Äpfeln, Bipolaris- und Drechslera-Arten an Getreide, Reis und Rasen, Septoria nodorum an Weizen, Botrytis cinerea an Erdbeeren, Gemüse, Zierpflanzen und Reben, Mycosphaerella-Arten an Bananen, Erdnüssen und Getreide, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten, Bipolaris- und Drechslera-Arten sowie Pyricularia oryzae, Corticium sasakii (syn. Rhizoctonia solani) und Cochliobolus miyabeanus an Reispflanzen und ggf. an deren Saatgut, Paecilomyces variotii an Materialien wie Holz.

### Beispiele

### Eingesetzte Polymere

- Luviskol® K30: Pulverförmiges Polyvinylpyrrolidon mit K-Wert von 29-33 (bei 1 wt% in Wasser), kommerziell erhältlich von BASF Aktiengesellschaft.
- Luviskol® VA64: Pulverförmiges Copolymer von Vinylpyrrolidon und Vinylacetat im Verhältnis 6/4 mit K-Wert von 26-34 (bei 1wt% in Ethanol), kommerziell erhältlich von BASF Aktiengesellschaft.
- Block VPNAc: Blockcopolymer aus Polyvinylpyrrolidon und Polyvinylacetat im Molverhältnis 6/4 (Mn =13900, Polydispersitätsindex 1,9, bestimmt mittels Gelpermeationschromatographie und berechnet als PDI= M_{w}:Mₙ).
- AMPS/PEA/BA: Copolymer von 2-Acrylamido-2-methyl-1-propansulfonsäure-co-phenoxyethylacrylat-co-n-butylacrylat im Gewichtsverhältnis 17/33/50, hergestellt analog Beispiel 1 aus WO2005/046328.

In den folgenden Beispielen wurde als Wärmeaustauscher eine dünne spiralförmige Rohrleitung mit einem Durchmesser von 10 mm verwendet, die sich in einem Ölbad mit einer Temperatur von 150°C befand.

### Beispiel 1 - Feste Lösung von Pyraclostrobin

35,0 kg Luviskol® K30 wurden in 91,0 kg demineralisiertem Wasser gelöst. In dieser Polymerlösung wurden 10,5 kg feingemahlenes Pyraclostrobin unter starkem Rühren suspendiert. Weiterhin wurde der wässerigen Suspension 1,8 kg Wettol® NT1 (von BASF; Alkyl naphthalinsulfonsäure-Kondensat, Natriumsalz) zugesetzt. Die Kurzzeithocherhitzung erfolgte durch Hindurchpumpen der wässerigen Suspension durch einen Wärmeaustauscher, wobei die Temperatur der Lösung auf 135°C anstieg. Die Durchflussgeschwindigkeit, die mit einer Hochdruckpumpe eingestellt wurde, betrug 700 bis 800 ml/min, bei einem Druck von 9 MPa. Die so erhaltene heiße Lösung wurde über eine Einstoffdüse mit 0,7 mm Durchmesser bei einem Druck von 90 bar in einem Sprühtrockner zerstäubt und getrocknet. Bei einer Zulufttemperatur von 150°C stellte sich eine Ablufttemperatur von 97°C ein. Es wurde ein trockenes Pulver mit ausgezeichneten Fließeigenschaften erhalten.

### Beispiel 2-9 - Feste Lösung von Pyraclostrobin und Epoxiconazole bzw. Meconazol

35,0 kg Luviskol® K30 wurden in 91,0 kg demineralisiertem Wasser gelöst. In dieser Polymerlösung wurden 6,1 kg feingemahlenes Pyraclostrobin und 4,4 kg feingemahenes Epoxiconazole (Pestizid 2) unter starkem Rühren suspendiert. Weiterhin wurde der Lösung 1,8 kg Wettol® NT1 zugesetzt. Die Kurzzeithocherhitzung erfolgte durch Hindurchpumpen der Lösung durch einen Wärmeaustauscher wobei die Temperatur der Lösung auf 133°C anstieg. Die Durchflussgeschwindigkeit, die mit einer Hochdruckpumpe eingestellt wurde, betrug 700 bis 800 ml/min, bei einem Druck von 9 MPa. Die so erhaltene heiße Lösung wurde über eine Einstoffdüse mit 0,7 mm Durchmesser bei einem Druck von 90 bar in einem Sprühtrockner zerstäubt und getrocknet. Bei einer Zulufttemperatur von 145°C stellte sich eine Ablufttemperatur von 95°C ein. Es wurde ein trockenes Pulver mit ausgezeichneten Fließeigenschaften erhalten.

Beispiele 3 bis 9 wurden wie in Beispiel 3 durchgeführt. Als Pestizid 2 wurde teilweise Epoxiconazol durch Metconazol ersetzt (siehe Tabelle 1, Spalte "Pestizid 2"). Anstelle von Wettol® NT1 wurden verschiedene andere Polymere verwendet (siehe Tabelle 1, Spalte "Polymer"). Die eingesetzten Mengen wurden nicht verändert.

**Tabelle 1**

| Beispiel | Pestizid 2 | Polymer |
|---|---|---|
| 3 | Epoxiconazol | Luviskol® VA64 |
| 4 | Epoxiconazol | Block VPNac |
| 5 | Epoxiconazol | AMPS/PEA/BA |
| 6 | Metconazol | Luviskol® K30 |
| 7 | Metconazol | Luviskol® VA64 |
| 8 | Metconazol | Block VP/Vac |
| 9 | Metconazol | AMPS/PEA/BA |

## Patentansprüche

1. Verfahren zur Herstellung von pulver- oder granulatförmigen festen Lösungen von schwerlöslichen Pestiziden, in denen das schwerlösliche Pestizid molekulardispers in einer Hilfsstoffmatrix vorliegt, durch Zerstäuben einer Lösung des Pestizides und der Matrixhilfsstoffe, **dadurch gekennzeichnet, dass** eine wässrige Suspension des schwerlöslichen Pestizides in Gegenwart der Matrixhilfsstoffe auf Temperaturen, die oberhalb der Siedetemperatur bei Normaldruck liegen, erhitzt und das schwerlösliche Pestizid in Lösung gebracht wird, und die Lösung des schwerlöslichen Pestizides und der Matrixhilfsstoffe (Sprühlösung) anschließend durch Zerstäuben und Trocknen in eine feste Form überführt wird, wobei die Temperatur der Sprühlösung vor der Zuführung in die Zerstäubungsvorrichtung 80 °C bis 350 °C beträgt.

2. Verfahren nach Anspruch 1 **dadurch gekennzeichnet, dass** die Temperatur der Sprühlösung vor der Zerstäubung 80 bis 300°C beträgt und das Pestizid gelöst vorliegt.

3. Verfahren nach einem der Ansprüche 1 bis 2, **dadurch gekennzeichnet, dass** die Verweilzeit des Wirkstoffes bei Temperaturen über 90°C kleiner 180 Sekunden beträgt.

4. Verfahren nach einem der Ansprüche 1 bis 3, **dadurch gekennzeichnet, dass** die Konzentration des schwerlöslichen Pestizides in der Hilfsstoffmatrix 1 bis 50 Gew.-% beträgt.

5. Verfahren nach einem der Ansprüche 1 bis 4, **dadurch gekennzeichnet, dass** die Sprühlösung ein Adsorbens enthält.

6. Verfahren nach einem der Ansprüche 1 bis 5, **dadurch gekennzeichnet, dass** die Erhitzung der Suspension des Pestizides durch Vermischen mit einem heißen Flüssigkeitsstrom oder einem heißem Dampfstrom erfolgt.

7. Verfahren nach Anspruch 6, **dadurch gekennzeichnet, dass** das Verhältnis der Suspension des Pestizides zum heißen Flüssigkeitsstrom zwischen 9 : 1 und 1 : 9 liegt.

8. Verfahren nach einem der Ansprüche 1 bis 7, **dadurch gekennzeichnet, dass** zur Trocknung Verfahren der Zerstäubungstrocknung oder der Wirbelschicht-Sprühgranulation verwendet werden.

9. Verfahren nach einem der Ansprüche 1 bis 8, **dadurch gekennzeichnet, dass** während der Zerstäubungstrocknung ein Adsorbens oder Puderungsmittel in den Sprühturm eingeblasen wird.

## Claims

1. A method for the production of pulverulent or granulated solid solutions of sparingly soluble pesticides, in which the sparingly soluble pesticide is molecularly dispersed in a matrix of inactive ingredients, by spraying a solution of the pesticide and of the inactive ingredients of the matrix, wherein an aqueous suspension of the sparingly soluble pesticide is heated in the presence of the inactive ingredients of the matrix to temperatures that are above the boiling point at normal pressure and the sparingly soluble pesticide is dissolved, and the solution of the sparingly soluble pesticide and of the inactive ingredients of the matrix (spray solution) is then converted to a solid form by spraying and drying, the temperature of the spray solution before feed into the spraying device being 80°C to 350°C.

2. The method according to claim 1, wherein the temperature of the spray solution before spraying is 80 to 300°C and the pesticide is present in dissolved form.

3. The method according to one of claims 1 to 2, wherein the residence time of the active substance at temperatures above 90°C is less than 180 seconds.

4. The method according to one of claims 1 to 3, wherein the concentration of the sparingly soluble pesticide in the matrix of inactive ingredients is 1 to 50 wt.% is.

5. The method according to one of claims 1 to 4, wherein the spray solution contains an adsorbent.

6. The method according to one of claims 1 to 5, wherein the suspension of the pesticide is heated by mixing with a hot stream of liquid or a hot stream of steam.

7. The method according to claim 6, wherein the ratio of the suspension of the pesticide to the hot liquid stream is between 9:1 and 1:9.

8. The method according to one of claims 1 to 7, wherein methods of spray drying or fluidized-bed spray granulation are used for drying.

9. The method according to one of claims 1 to 8, wherein an adsorbent or dusting agent is injected into the spraying tower during spray drying.

## Revendications

1. Procédé pour la production de solutions solides, sous forme de poudre ou de granulé, de pesticides difficilement solubles, dans lesquelles le pesticide difficilement soluble se trouve en dispersion moléculaire dans une matrice d'adjuvants, par pulvérisation d'une solution du pesticide et des adjuvants matriciels, **caractérisé en ce qu'**on chauffe une suspension aqueuse du pesticide difficilement soluble, en présence des adjuvants matriciels, jusqu'à des températures qui se situent au-dessus de la température d'ébullition sous la pression normale et on met en solution le pesticide difficilement soluble, et ensuite on convertit en une forme solide par pulvérisation et séchage la solution du pesticide difficilement soluble et des adjuvants matriciels (solution de pulvérisation), la température de la solution de pulvérisation valant de 80 °C à 350 °C avant l'introduction dans le dispositif de pulvérisation.

2. Procédé selon la revendication 1, **caractérisé en ce que** la température de la solution de pulvérisation avant la pulvérisation vaut de 80 à 300 °C et le pesticide se trouve en solution.

3. Procédé selon l'une quelconque des revendications 1 et 2, **caractérisé en ce que** le temps de séjour de la substance active à des températures de plus de 90 °C est de moins de 180 secondes.

4. Procédé selon l'une quelconque des revendications 1 à 3, **caractérisé en ce que** la concentration du pesticide difficilement soluble dans la matrice d'adjuvants vaut de 1 à 50 % en poids.

5. Procédé selon l'une quelconque des revendications 1 à 4, **caractérisé en ce que** la solution de pulvérisation contient un adsorbant.

6. Procédé selon l'une quelconque des revendications 1 à 5, **caractérisé en ce que** le chauffage de la suspension du pesticide s'effectue par mélange avec un courant de liquide chaud ou un courant de vapeur chaude.

7. Procédé selon la revendication 6, **caractérisé en ce que** le rapport de la suspension du pesticide au courant de liquide chaud est compris entre 9 : 1 et 1 : 9.

8. Procédé selon l'une quelconque des revendications 1 à 7, **caractérisé en ce que** pour le séchage on utilise le procédé du séchage par atomisation ou de la granulation par pulvérisation en lit fluidisé.

9. Procédé selon l'une quelconque des revendications 1 à 8, **caractérisé en ce que** pendant le séchage par atomisation on insuffle dans la tour de pulvérisation un adsorbant ou agent de poudrage.
